(19) **Europäisches Patentamt**
**European Patent Office**
**Office européen des brevets**

(11) **EP 4 451 168 A1**

(12) **EUROPEAN PATENT APPLICATION**

(43) Date of publication:
**23.10.2024 Bulletin 2024/43**

(21) Application number: **24171441.9**

(22) Date of filing: **19.04.2024**

(51) International Patent Classification (IPC):
**G06F 30/23** $^{(2020.01)}$      G06F 111/10 $^{(2020.01)}$
**G06F 111/06** $^{(2020.01)}$

(52) Cooperative Patent Classification (CPC):
**G06F 30/23;** G06F 2111/06; G06F 2111/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.04.2023 US 202363497581 P**

(71) Applicant: **Dassault Systèmes Americas Corp.
Waltham, MA 02451 (US)**

(72) Inventors:
• **Scherz, Lennart
22763 Hamburg (DE)**
• **Pedersen, Claus Bech Wittendorf
22587 Hamburg (DE)**

(74) Representative: **Bandpay & Greuter
11 rue Christophe Colomb
75008 Paris (FR)**

(54) **SYSTEMS AND METHODS FOR RESOLVING NUMERICAL INSTABILITIES**

(57)   Embodiments determine physical behavior of real-world objects. Using a computer-based model representing a real-world object, embodiments add pseudo-constitutive modeling to the computer-based model to alleviate local numerical instabilities caused by ill-conditioned elemental stiffness operators within elements of the model. A computer-based model, representing a real-world object using a plurality of elements, is defined which indicates one or more materials represented by the elements. Equations describing physics-based behaviors of the one or more materials are defined. A stabilization equation that is a function of a non-linear deformation gradient matrix is defined. A simulation is performed of the real-world object, subject to a load, using the defined computer-based model, the defined equations describing physics-based behaviors, and the defined stabilization equation. Performing the simulation includes applying the stabilization equation to each of the plurality of elements. Results of performing the simulation indicate the physical behavior of the real-world object.

FIG. 1

Processed by Luminess, 75001 PARIS (FR)

**Description**

BACKGROUND

A number of systems and programs are offered on the market for the design of parts using computer aided design (CAD), or computer aided engineering (CAE). These so-called CAD systems allow a user to construct and manipulate complex three-dimensional models of objects or assemblies of objects. CAD systems thus provide a representation of modeled objects using edges, lines, or, in certain cases, faces or polygons. Lines, edges, faces, or polygons may be represented in various manners, e.g., non-uniform rational basis splines (NURBS).

These CAD systems manage parts or assemblies of parts modeled by objects, which are mainly specifications of geometry. In particular, CAD files contain specifications, from which geometry is generated. From geometry, a representation is generated. Specifications, geometry, and representations may be stored in a single CAD file, or multiple CAD files. CAD systems include graphic tools for representing the modeled objects to the designers; these tools are dedicated to the display of complex objects. For example, an assembly may contain thousands of parts. A CAD system can be used to manage models of objects, which are stored in electronic files.

The advent of CAD and CAE systems allows for a wide range of representation possibilities for objects. One such representation is a finite element model (FEM). A FEM, or other such CAD, CAE, or computer-based model, may be programmed in such a way that the model has the properties of the underlying object or objects that the model represents. When a FEM, or other such computer-based model is programmed in such a way, it may be used to perform simulations of the object that the model represents. For example, a FEM may be used to represent the interior cavity of a vehicle, the acoustic fluid surrounding a structure, and any number of real-world objects and systems. When a given model represents an object and is programmed accordingly, it may be used to simulate the real-world object itself. For example, a FEM representing a stent may be used to simulate the use of the stent in a real-life medical setting.

Computer-based models may be used to improve the design of the objects that the models represent. Design improvements may be identified through use of computer-based optimization techniques that run a series of simulations in order to identify changes to the design of the model and thus, the underlying real-world object that the model represents.

SUMMARY

While computer-based methods for determining the physics-based behavior, i.e., the physical behavior, of real-world objects exist, these existing methods may provide inaccurate results. Specifically, existing methods may experience divergence and local numerical instabilities when determining the primal solution for models undergoing large displacements, as well as large deformations. Divergence/instabilities when obtaining the primal solution lead to failure in completing the analysis, i.e., not reaching a converged solution. As such, improvements to existing simulation and modeling methods are needed. Embodiments provide such improvements. Embodiments are directed to designing real-world objects, determining behavior of real-world objects, and simulating that provides pseudo-constitutive modeling to solve numerical instabilities when determining a primal solution for a simulation.

One such example embodiment is a computer-implemented method for determining the physical behavior, i.e., the physics-based behavior, of a real-world object. Such an embodiment begins by defining, in memory of a processor, a computer-based model representing the real-world object using a plurality of elements. The defined model indicates one or more materials represented by each element of the plurality of elements. The embodiment continues by defining equations describing physical behavior of the one or more materials and defining a stabilization equation that is a function of a non-linear deformation gradient matrix. In turn, a simulation of the real-world object subject to a load is performed using (i) the defined computer-based model, (ii) the defined equations describing physical behavior, and (iii) the defined stabilization equation. In such an embodiment, performing the simulation includes applying the stabilization equation to each of the plurality of elements. Results of performing the simulation indicate the physical behavior, i.e., the physics-based behavior, of the real-world object.

According to an embodiment, "elements" (i.e., the elements of the computer-based model used to represent the real-world object) are tessellated elements of a finite element model (i.e., the computer-based model). However, it is noted that embodiments are not limited to utilizing tessellated elements and, instead, embodiments may employ any elements, such as triangular or quadrilateral membranes or shells.

In embodiments, the computer-implemented method further continues by, for each element of the plurality of elements in the model, associating artificial internal forces with the element based on the defined stabilization equation. Another embodiment, further continues by, for each element of the plurality of elements in the model, associating an artificial-based and physics-based behavior (i.e., a combined artificial and physics based behavior), with the element based on the associated artificial internal forces. According to an embodiment, the computer-implemented method performs the simulation of the real-world object subject to the load using the artificial internal forces associated with each element, and the artificial-based and physics-based behavior, associated with each element.

In yet another embodiment, the computer-implemented method performs the simulation of the real-world object using the defined stabilization equation and reduces a condition value associated with a given element of the plurality of elements. In such an embodiment the condition value is a function of the non-linear deformation gradient matrix.

In another embodiment, the computer-implemented method updates the computer-based model based upon the results of performing the simulation and determines an updated physical behavior of the real-world object by performing a simulation of the real-world object using (i) the updated computer-based model, (ii) the defined equations describing physics-based behaviors, and (iii) the defined stabilization equation.

In another embodiment, the computer-implemented method further comprises iterating (i) updating the computer-based model based upon the determined updated physical behavior, and (ii) the determining the updated physical behavior, until the determined updated physical behavior, satisfies a criterion.

In some embodiments, the computer-based model is any one of or a combination of a finite element model, a boundary element method, a finite difference method, a finite volume method, or a discrete element method.

In embodiments, the real-world object represented by the computer-based model may be any real-world object. For instance, in an embodiment, the real-world object is any one of an automobile, an industrial equipment, a plane, a civil structure, a marine device, a medical instrument, a consumer good, an electronic device, armor, or manufacturing equipment. Further, the real-world object represented by the computer-based model may be used in one of an automobile application, industrial equipment application, an airplane application, a civil structure application, a marine device application, a medical instrument application, a consumer good application, an electronic device application, armor applications, or manufacturing equipment application, amongst other examples. In this way, embodiments can optimize designs of real-world objects and optimize applications that utilize the real-world applications.

In embodiments, the corresponding physics-based behavior of an automobile may be, but is not limited to, the deformation of a body panel of the automobile during a collision.

In embodiments, the corresponding physics-based behavior of an industrial equipment may be, but is not limited to, the deformation of one or more pieces of industrial equipment during operation.

In embodiments, the corresponding physics-based behavior of a plane may be, but is not limited to, the deformation of a wing of the plane subject to aerodynamic forces.

In embodiments, the corresponding physics-based behavior of a civil structure, may be, but is not limited to, the deformation of one or more structural components subject to load.

In embodiments, the corresponding physics-based behavior of a marine device may be, but is not limited to, the deformation of the marine device subject to various degrees of hydrostatic pressure.

In embodiments, the corresponding physics-based behavior of a medical instrument may be, but is not limited to, the deformation of a syringe needle tip subject to torque.

In embodiments, the corresponding physics-based behavior of a consumer good may be, but is not limited to, the deformation of an exemplary consumer good when undergoing, for example, a deformation associated with the consumer good's normal use.

In embodiments, the corresponding physics-based behavior of an electronic device may be, but is not limited to, the deformation of an electronic device when subject to deformation associated with ground impact.

In embodiments, the corresponding physics-based behavior of armor may be, but is not limited to, the deformation of armor when subject to the deformation associated with absorbing an impact.

In embodiments, the corresponding physics-based behavior of manufacturing equipment may be, but is not limited to, the deformation of one or more pieces of manufacturing equipment during operation.

Yet another embodiment is directed to a system for determining physical behavior of a real-world object. In such an embodiment, the system includes a processor and a memory with computer code instructions stored thereon. The processor and the memory, with the computer code instructions, are configured to cause the system to implement any embodiments or combination of embodiments described herein.

Another embodiment is directed to a cloud computing implementation for determining physical behavior of a real-world object. Such an embodiment is directed to a computer program product executed by a server in communication across a network with one or more clients. The computer program product comprises a computer readable medium with program instructions which, when executed by a processor, causes the processor to implement any embodiments or combination of embodiments described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

    FIG. 1 is a flowchart of an exemplary topology optimization workflow.

FIG. 2 shows representations of bifurcations due to large deformation and geometrical non-linear modeling.

FIG. 3A illustrates a two-dimensional (2D) computer-based model of a quadratic four-node element with integration points, in an un-deformed configuration, according to an embodiment.

FIGs. 3B - 3E are plots showing the condition number calculated at the elemental integration points for the quadratic 2D four-node element of FIG. 3A, as a function of the deformation gradient matrix $F$ for four different types of kinematic deformation.

FIG. 4 is a flowchart of a non-linear CAE workflow according to an embodiment.

FIG. 5 is a flowchart of a method for determining physical behavior of a real-world object according to an embodiment.

FIG. 6 shows the deformation of a material particle $P$ from an un-deformed state to a deformed state according to an embodiment.

FIG. 7 is a flowchart of an optimization method according to an embodiment.

FIG. 8 shows how an embodiment can be incorporated into an existing geometrical non-linear finite element.

FIGs. 9A - 9D show two-dimensional (2D) and three-dimensional (3D) C-shaped structures without added artificial constitutive material modeling and with artificial constitutive material modeling according to an embodiment.

FIG. 10 shows 2D simulation results determined using existing methods and 2D simulation results determined using embodiments.

FIG. 11 shows 3D simulation results determined using existing methods and 3D simulation results determined using embodiments.

FIG. 12 is a flowchart of a sensitivity based design optimization workflow according to an embodiment.

FIG. 13 depicts a geometrical non-linear topology optimization benchmark model where both elastic and elastoplastic material properties are defined.

FIG. 14A shows results of a geometrical non-linear topology stiffness optimization, for an elastic physical material, solved using an existing method and an embodiment.

FIG. 14B shows results of a geometrical non-linear topology stiffness optimization, for an elastoplastic physical material, solved using an existing method and an embodiment.

FIG. 15 shows two elastic topology optimized designs determined using an existing method and an embodiment.

FIGs. 16A and 16B show a non-linear transient 3D topology optimization model.

FIG. 17A shows a design density layout for a 3D model which fails in an optimization performed using existing methods.

FIG. 17B is an optimization iteration history plot for the 3D model of FIG. 17A showing a normalized maximal vertical displacement objective function value and normalized volume constraint value as a function of optimization iterations.

FIG. 17C is a 3D model where shading indicates stresses of the failed primal solution of the 3D model of FIG. 17A exhibiting local artificial instability.

FIG. 17D is a 3D model where shading indicates stresses of the model of FIGs. 17A and 17C when numerical stabilization is applied according to an embodiment.

FIG. 18A shows an optimized design density layout of a converged topology optimization.

FIG. 18B is an optimization iteration history plot for the 3D model of FIG. 18A showing a normalized maximal vertical displacement objective function value and normalized volume constraint value as a function of optimization iterations.

FIG. 18C depicts a 3D model where shading indicates stresses of the primal solution of an initial design at a point of maximum displacement.

FIG. 18D depicts a 3D model where shading indicates stresses of the primal solution of an optimized design at the point of maximum displacement where an embodiment is applied.

FIG. 19 is a simplified block diagram of a computer system for automatically determining physical behavior of a real-world object according to an embodiment.

FIG. 20 is a simplified block diagram of a computer network environment in which an embodiment may be implemented.

## DETAILED DESCRIPTION

A description of example embodiments follows.

Many simulations using computer-based models representing real-world objects experience divergence and local numerical instabilities when determining the primal solutions for a model (or portion(s) thereof) that undergoes large displacements and/or large deformations. Especially, a lack of convergence to a primal solution is prevalent in the field of geometrical non-linear topology optimization where a stiffness operator between solid and void elements can get significantly ill-conditioned. Typically, the numerical ill-conditioning of the finite element stiffness operator for an assembled system is artificially caused by a few distorted elements in the model. Embodiments solve this problem by locally stabilizing the ill-conditioned parts of a model by adding an additional artificial constitutive modeling to the physical constitutive modeling without changing the overall stiffness of the system.

A previous attempt to achieve numerical stabilization modifies the mathematical description representing how materials respond to various loadings and/or deformations, but such modification is not in relation to the conditional number of the elemental stiffness operator. Such a previous approach adds an overall stiffness for the stiffness operator of the primal solution to all low stiffness (i.e., flexible) elements. This existing approach manipulates the stiffness scaling, frequently using a linear scaling factor, but does not directly resolve the issue of ill-conditioned operators and thereby has several drawbacks. For example, a heuristic scheme has to be applied, and it is not intuitive to identify how much stiffness should be added to the flexible elements in order to cause the stiffens operator to be well conditioned. Further, if too little stiffness is added to the flexible elements, then the stiffness operator is still ill-conditioned. Conversely, if too much stiffness is added to the flexible elements, then the overall primal solution most likely changes too much compared to the original solution of the physical system.

The issue of local numerical instabilities is particularly pronounced in geometrical non-linear topology optimization. In typical geometrical non-linear topology optimization methods, a solid-void material layout is enforced where typically the stiffness ratio between void material and solid material is in the range of $10^{-9}$ to $10^{-6}$. Thereby, the void and intermediate density elements are often ill-conditioned for the stiffness operator and hence, get highly distorted while solving for the primal solution. Therefore, the solution for the primal solution is often not determined. Consequently, the entire optimization workflow fails in convergence, and no converged optimized design is obtained.

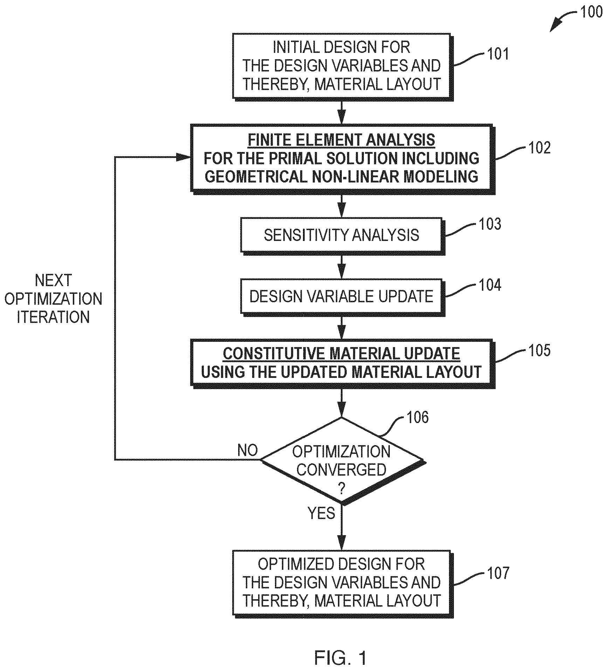

FIG. 1 is a flowchart of a method 100 of an exemplary stabilization approach to address numerical instabilities for local artificial bifurcations in the stiffness operator for geometrical non-linear topology optimization. The method 100 begins at step 101 by receiving or otherwise defining an initial design for the design variables, i.e., the material layout, of an object. In an embodiment, the initial design is indicated at step 101 in a computer-based model. Next, a finite element analysis 102 for the primal solution, which includes geometrical non-linear modeling, is performed using the material layout from step 101. According to an embodiment, the primal solution is the result of the FEM analysis. In embodiments, certain values can be taken from the primal solution for an optimization formulation, e.g., a certain displacement in the model under loading. To continue, a sensitivity analysis 103 is then applied and, in turn, the design variables are updated 104 based on the sensitivity analysis 103. Thereafter, the constitutive material of the originally defined model from step 101 is updated 105 using the updated material layout from step 104. The method 100 then checks 106 to see if the optimization has converged. If the optimization has not converged, the method 100 returns to step 102 and performs another optimization iteration repeating steps 102, 103, 104, 105, and 106. If, at step 106, it is determined that the optimization has resulted in a converged design, the method 100 results in an optimized design 107 for the design variables, i.e., the material layout and the method 100 ends.

Each step 101-107 in the method 100 represents a different possible step in the topology optimization workflow. It is noted that both existing stabilization approaches and embodiments may be implemented in the method 100. For instance, embodiments described herein can be implemented in block 102, the finite element analysis step.

Element removal has been attempted to improve the geometrical non-linear topology optimization issue of ill-conditioned stiffness operators for the void and intermediate density elements. This existing element removal approach can be implemented in the constitutive material update step 105 of the stabilization approach shown in method 100. The element removal stabilization approach depends upon the design variables, and not the deformation of the primal solution. Thus, the existing elemental removal approach is completely different compared to embodiments which depend on the deformation of the primal solution.

While the elemental removal approach removes the low stiffness elements of the material layout for the primal solution, the elemental removal approach has drawbacks. For example, in the element removal method, it is not obvious which threshold for the design variables should be applied so as to determine which elements to remove. Thereby, many elements are removed which do not need to be removed to obtain a well-conditioned stiffness operator. Further, the elemental removal approach has a slow process of reintroducing previously removed elements during optimization iterations and, thereby, causes many optimization iterations resulting in high computational costs.

A fictitious domain approach has also been used in an attempt to improve the geometrical non-linear topology optimization issue of having ill-conditioned stiffness operators for the void and intermediate density elements. This fictitious domain approach is also implemented in the constitutive material update step 102. The existing fictitious domain stabilization approach depends upon the design variables, and not the deformation of the primal solution.

The fictitious domain approach converts low stiffness elements into elements with a linear stiffness operator based upon the design variables for the material layout. Problematically, when utilizing the fictitious domain approach, it is not obvious which scheme and parameters in the scheme should be applied for converting the original stiffness operator to a linear stiffness operator. Further, for very large deformations, the parameters for the fictitious domain scheme have to be incrementally modified during optimization iterations, and this results in many optimization iterations and high computational costs.

The relaxed convergence criteria approach is yet another previous attempt to improve the geometrical non-linear topology optimization issue of having ill-conditioned stiffness operators for the void and intermediate density elements. The relaxed convergence criteria approach can be implemented in the finite element analysis step 102 of the method 100. The relaxed convergence criteria approach relaxes the convergence criteria of the primal solution, but does not solve the issue of the stiffness operator being ill-conditioned. Further, relaxing the convergence criteria for the primal solution has drawbacks. For example, it is not obvious which scheme and parameters in the scheme should be applied for relaxing the convergence criteria for the primal solution. Further, when using the relaxed convergence criteria approach, the finite element nodes attached to the flexible elements can start an artificial oscillation. Artificial oscillations cause many optimization iterations resulting in high computational costs. The artificial oscillations can also merge into the nodes of other elements so the primal solution does not converge.

Further still, plasticity material interpolation has been attempted to improve the geometrical non-linear topology optimization issue of having ill-conditioned stiffness operators for the void and intermediate density elements. The plasticity material interpolation can be implemented in the finite element analysis step 102 of the method 100 of FIG. 1. The plasticity material interpolation approach applies a lower penalization for plastic yielding and/or hardening than the penalization for the elastic Young's modulus. Since these penalizations are a function of the design variables, and not on the deformation of the primal solution, the plasticity material interpolation approach is distinct from the embodiments described herein. The plasticity material interpolation approach has drawbacks. For example, the plasticity material interpolation approach can only be applied to structures where the parts consist of materials which can be represented by an elastoplastic material model, as opposed to all feasible constitutive material models.

A hyperelastic base material approach has also been attempted to improve the geometrical non-linear topology optimization issue of having ill-conditioned stiffness operators for the void and intermediate density elements. This hyperelastic base material approach can be implemented in the finite element analysis step 102. In this approach, a hyperelastic (e.g. rubber material) is applied for the base material of the design domain. The hyperelastic base material approach has drawbacks. For example, this approach can only be applied to structures where the parts consist of materials which can be represented by a hyperelastic model. Thus, the hyperelastic base material approach is not suitable to address all feasible constitutive material models. Further, the hyperelastic base material approach adds a general overall stiffness for the void elements, whereas the pseudo-constitutive modeling approach described herein is directly based upon the condition number.

Therefore, the existing methods: (1) only increase the stiffness of the flexible elements and are not linked to the condition-number of a stiffness operator, (2) are only applicable when applied in an optimization workflow that depends on design variables and not the deformation of the primal solution and (3) do not directly address the core issue of numerical ill-conditioned stiffness operators, but instead attempt to avoid quantifying the impact on the primal solution of the numerical ill-conditioned stiffness operator. As such, previous methods tried to manipulate the constitutive modeling so as to numerically stabilize the global stiffness operator, but existing methods do not directly manipulate the constitutive modeling in relation to the condition number of the elemental stiffness operator.

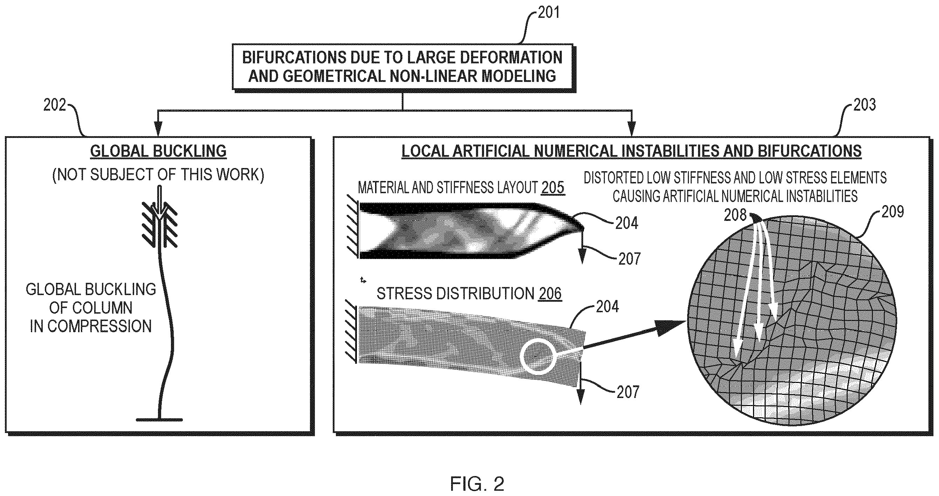

FIG 2. illustrates examples of different bifurcations caused by large deformations during geometrical non-linear modeling 201. Specifically, FIG. 2 illustrates the difference between global physical bucking instabilities 202 and local artificial numerical instabilities 203 caused by local ill-conditioned stiffness operators. Global buckling is not addressed by embodiments. Instead, embodiments suppress the issue of local artificial numerical instabilities 203 caused by local ill-conditioned stiffness operators. This issue is shown in FIG. 2 for computer-based model 204 with the stiffness layout 205 and stress distribution 206. When the model 204 is subject to the load 207 this causes significant deformation and artificial numerical instabilities for the elements 208 as shown in the expanded view 209 of the stress distribution 206 of the computer-based model 204.

Large deformation (deformations in which strains are large enough to invalidate the linearization of the deformation field) and geometrical non-linear modeling are important for the realistic modeling of many applications, e.g., real-world objects. If a system/object has small deformations and strains, equilibrium can be determined in an undeformed geometry while still achieving physically accurate results. In contrast, if a system/object has large deformations and geometrical non-linear behavior, equilibrium is determined in the deformed geometry to achieve physically accurate results. In such systems, while simulating the large deformation, and geometrical modeling is needed to achieve accurate results, the large deformation and geometrical non-linear modeling introduces bifurcation points in the modeling response. For example, these bifurcation points can be important for the realistic modeling of the pre-buckling and post-buckling 201 and ultimately, the accurate prediction of the stability of the system. Typically, in the scenario of global buckling 201 these physical bifurcation points yield an ill-conditioned stiffness operator, but they can be numerically stabilized using quasi-static modeling, prescribed displacement loading, and arc-length method, amongst other examples, to obtain the physical primal solution.

Large deformation and geometrical non-linear modeling might cause low stiffness regions in the model to be excessively distorted (e.g., the elements 208), which can lead to numerical artificial instabilities 203 due to local elemental ill-conditioned stiffness operators in the finite element simulation. Typically, these low stiffness regions consistent of a few finite elements and have little to no influence on the modeling quality of the predicted global physical buckling and the predicted stability of the system. Frequently, these numerical artificial instabilities cause the large deformation and geometrical non-linear analysis to fail in achieving convergence of the primal solutions. This failure can occur because these numerical artificial instabilities can cause a few finite elements to be overly deformed such that the numerical integration of these finite elements is infeasible. Further, the stiffness operator for these few finite elements is indefinite, or even negative definite, so artificial local bifurcations occur yielding large non-physical displacements. Further still, an iterative solver scheme applied for the geometrical non-linear analysis will keep oscillating in the primal solution as the local stiffness operator is ill-conditioned and thereby, no converged solution is obtained.

Embodiments described herein implement a new approach that adds artificial constitutive material modeling to enforce the stiffness operator to be well-conditioned and suppress the numerical artificial instabilities.

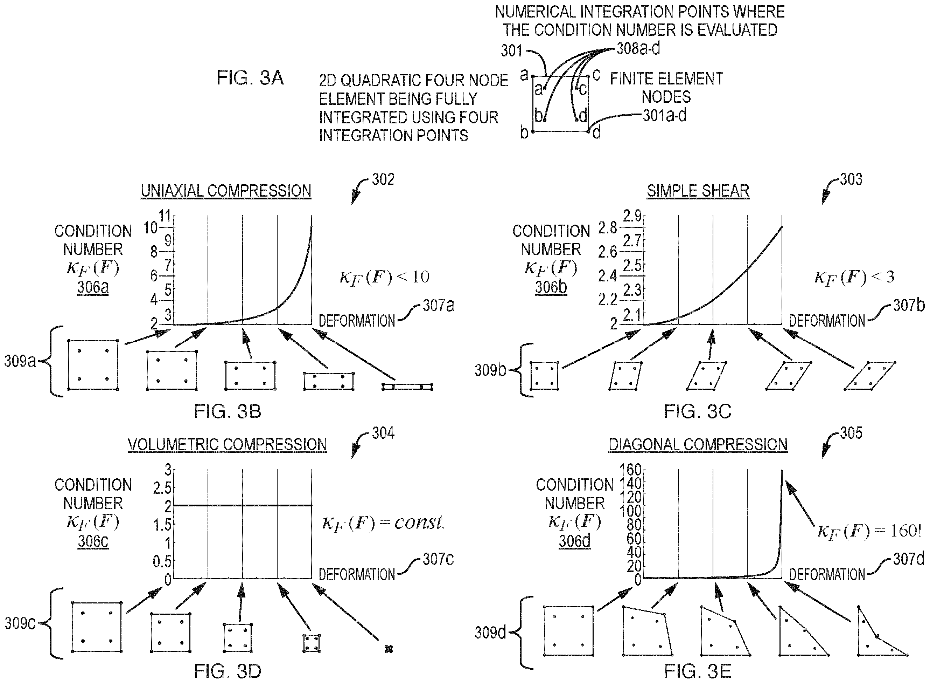

FIG. 3A shows a 2D quadratic four-node element 301 (with finite element nodes 301a-d), in an un-deformed state, being fully integrated using four integration points 308a-d. FIGs. 3B - 3E are plots 302, 303, 304, and 305, respectively, showing condition number 306a-d for the element 301 as a function of deformation gradient matrix $F$ 307a-d assuming plain strain. The condition number 306a-d is calculated at the four numerical integration points 308a-d for four different kinematic deformation modes of the element 301, namely, uniaxial compression, shown in plot 302, simple shear, shown in plot 303, volumetric compression, shown in plot 304, and diagonal compression, shown in plot 305. These plots 302, 303, 304, 305, each show the condition number 306a-d of the stiffness operator for small to large deformation rates 307a-d, respectively. The plots 302, 303, 304, and 305 each have respective visualizations 309a-d of the deformation of the element 301 as a function of the deformation rates 307a-d.

Plots 302, 303, and 304 show that the three deformation modes yield numerically reasonable condition numbers 306a, 306b, and 306c for both small and excessive deformations. In contrast, the deformation in plot 305 yields a very high condition number 306d, causing the system to be numerically instable. Plot 305 also shows that the condition number 306d significantly increases when the surface of the deformed element approaches one of the integration points (in this example, integration point 308c) for the element. This observation can also be confirmed for other element types, numerical integration point approaches (e.g., different locations of integration points), and deformation modes.

Typically, many simulations applied from the transport and mobility sector (e.g., cars), the aerospace and defense sector (e.g. airplanes), life science sector (e.g., medical devices), and high-tech sector (e.g., cell phones and laptops) apply large deformation non-linear finite element modeling to obtain physically correct results when solving the primal solution. However, these finite element models occasionally fail during the convergence of the primal solution because very few elements among many thousands, or among many millions, have local artificial numerical bifurcations, which cause the stiffness operator to be ill-conditioned. These local artificial numerical bifurcations can occur both when solely solving for the primal solution and when the primal solution is a part of the iterative optimization workflow.

Embodiments address the issues experienced by the aforementioned industries, by introducing an additional artificial pseudo-constitutive model that is added to a geometrical CAE model (e.g., a finite element model) in order to eliminate numerical instabilities and ill-conditioned elemental stiffness operators - where the artificial pseudo-constitutive model is based upon the condition number of the elemental stiffness operators.

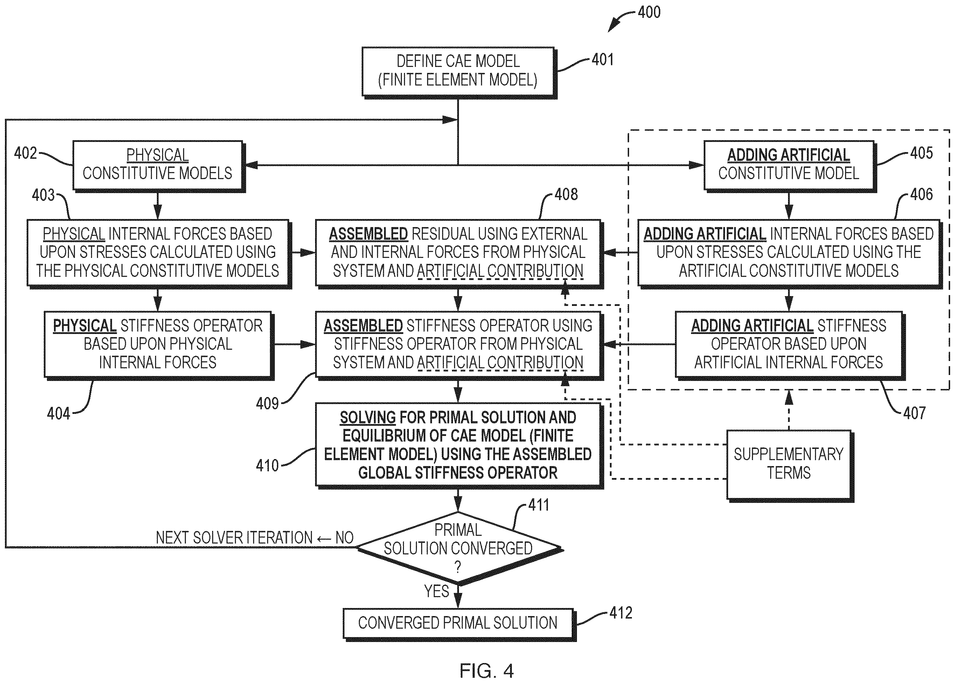

FIG. 4 is a flowchart of a workflow 400 for simulating a real-world object to determine behavior of the object. The user defined objective function of the optimization workflow is to minimize displacement in elements of a finite element model. The workflow 400 starts at step 401 with defining a computer-based model, e.g., a finite element model representing the object. After defining the model at step 401, the method 400 continues to steps 402 and 405. At step 402, a physical constitutive model is defined. Meanwhile, a step 405, an artificial constitutive model is added to the finite element model defined at step 401. The method 400 then adds artificial internal forces at step 406 to the artificial constitutive model from step 405. According to an embodiment, the artificial internal forces added at step 406 are based upon stresses calculated using the artificial constitutive model of step 405. To continue, the method 400 adds artificial stiffness operators to the artificial constitutive model at step 407 based upon the artificial internal forces of step 406. Physical internal forces are added at step 403 to the physical constitutive model defined at step 402. The physical internal forces added at step 403 are based upon stresses calculated using the physical constitutive model from step 402. A physical stiffness operator is added at step 404 to the physical internal forces from step 403. The stiffness operator added at step 404 is based upon the physical internal forces from step 403. Both the physical internal forces (added at step 403) and the artificial internal forces (added at step 406) and external forces are assembled into a residual at step 408. In this way, step 408 assembles a residual using external and internal forces from both the physical system (forces from step 403) and artificial system (forces from step 406). Similarly, both the physical stiffness operator (from step 404) and the artificial stiffness operator (from step 407) are assembled into a stiffness operator 409. In this way, step 409 assembles a stiffness operator using a stiffness operator from both the physical system (stiffness operator from step 404) and a stiffness operator from the artificial system (stiffness operator from step 407). To continue, the method 400 solves for a primal solution and equilibrium of the finite element model at step 410 using the assembled global stiffness operator 409. The workflow 400 then checks at step 411 to see if the primal solution has converged. If the solution is not converged, the method 400 returns to steps 402 and 405 and repeats steps 402-411 of workflow 400. If, at step 411, it is determined that the primal solution has converged, the workflow 400 results in a converged primal solution at step 412 and the method 400 ends.

In the workflow 400, steps 401, 402, 403, 404, 411, and 412 are steps that may be part of a standard non-linear CAE workflow (finite element modeling workflow) In addition to steps 401, 402, 403, 404, 411, and 412, the method 400 includes steps to eliminate numerical instabilities and ill-conditioned elemental stiffness operators. Specifically, the method 400 adds artificial constitutive modeling at step 405 (adding an artificial pseudo-constitutive model using the condition number of the non-linear deformation matrix $F$ at the finite elemental integration points), adds artificial internal forces at step 406, and adds an artificial stiffness operator at step 407. As such, the method 400 includes step 405, 406, and 407 in addition to existing CAE workflow steps. In the method 400, at step 408, a residual defining the structural equilibrium is assembled using the physical internal forces from step 403 and the artificial internal forces from step 406. The physical stiffness operator 404 and the artificial stiffness operator 407 are assembled in 409 yielding a total structural stiffness operator. Afterwards, the primal solution is determined at step 410 using the assembled residual from step 408 and the assembled stiffness operator from step 409. At step 411, a check is performed to determine if the solution is converged. According to an embodiment, the check at step 411 uses results/values from the primal solution (determined at step 410) to evaluate a user defined objective function and constraints. If the solution is not converged, then an additional solver iteration is performed and the method 400 moves back to steps 402 and 405 and, if the solution is converged the method 400 moves to step 412.

Numerical solvability in finite element analysis frequently depends upon the condition number of the stiffness operator. If the deformation matrix $F$ is ill-conditioned, then the stress calculation can be numerically instable and the stiffness operator can be ill-conditioned, often causing divergence of the solution for the primal solution. Embodiments introduce a local stability pseudo-constitutive modeling using the condition number of the non-linear deformation matrix $F$ at the finite elemental integration points. In an embodiment, a constitutive material law is defined that depends on the condition number $F$ and this constitutive material law induces stresses that minimize the condition number for the stiffness operators in a finite element setup, as shown in FIG 4. Thereby, the added artificial stresses are only introduced in the direction that minimizes the condition number of the stiffness operators for a few critical elements, and the added artificial stresses do not simply increase the stiffness in every direction of a given element.

Embodiments, e.g., the method 400, address numerical instabilities for local artificial bifurcations caused by ill-conditioned elemental stiffness operators and do not impact or modify the overall global physical buckling (physical bifurcations) of the system caused by the geometrical non-linear modeling.

Amongst other advances, embodiments improve over the prior art by implementing rigorous numerical calculations of the primal solution for a geometrical non-linear finite element model having low stiffness elements that are ill-conditioned. This allows embodiments to determine a physical primal solution, while also requiring less solver iterations to obtain the primal solution, and thereby, lower computational costs.

Further, for geometrical non-linear topology optimization workflows where the issue of local numerical instabilities is particularly pronounced, embodiments can enforce a solid-void material layout with a high stiffness ratio between void material and solid material. This approach can result in a convergence in the primal solution for all optimization iterations. Further, enforcing a solid-void material layout with a high stiffness ratio enables determining a design, as the primal solution that does not fail, and requires fewer solver iterations per optimization iteration and, thereby, is less computationally costly. Moreover, in embodiments no heuristic schemes and heuristic parameters depending upon the design variables are modified during the optimization iterations which results in performing fewer optimization iterations and, as such, embodiments require fewer solver iterations per optimization iteration and lower computational costs.

Local artificial numerical instability often appears during a deformation process and frequently causes non-convergence in the solving scheme for the primal solution of the finite element residual. Previous approaches to resolve local artificial numerical stability problems result in convergence issues in the primal solution. As such, these previous approaches fail to numerically obtain the full primal solution. Further, previous approaches create oscillations in the convergence history for the primal solution; and the residual is not fulfilled for a few elements among several thousands, to millions, of elements.

Embodiments directly add a stiffness operator condition number for each finite element in the model, and thereby, embodiments are strongly coupled to the numerical stability of the finite element model. Present embodiments also define a constitutive material law that depends on the condition number for the local elemental deformation which induces stresses that minimize the condition number. Further, embodiments are enforced at localized regions (i.e., a few elements) where needed. This approach is also more general, as it is a function of the local deformation and, therefore, does not require a second field (i.e., a second set of design variables). Embodiments therefore ensure stable convergence of the primal solution.

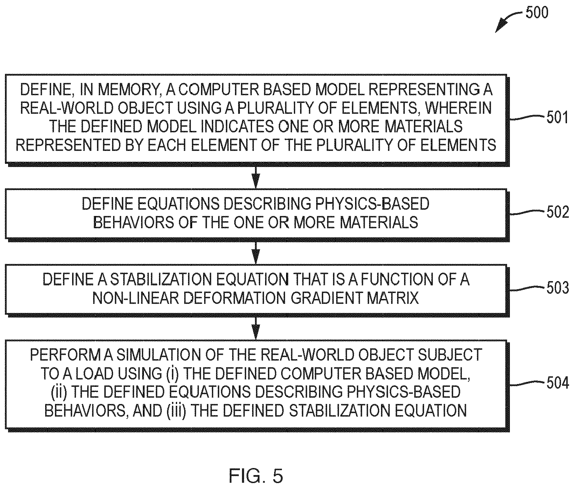

FIG. 5 is a flowchart of a method 500 for determining physical behavior of a real-world object. The method 500 includes steps to eliminate numerical instabilities and ill-conditioned elemental stiffness operators, according to an embodiment. The method 500 is computer implemented and, as such, may be implemented by one or more processors executing computer code instructions.

The method 500 begins at step 501 by defining a computer-based model in the memory of a processor implementing the method. The computer-based model defined at step 501 represents a real-world object using a plurality of elements and indicates one or more materials represented by each element of the plurality of elements of the real-world object. The computer-based model defined in step 501 may be any one of, or a combination of, a finite element model, a boundary element method, a finite difference method, a finite volume method, or a discrete element method. Further, the real-world object defined in step 501 may be any one of an automobile, an industrial equipment, a plane, a civil structure, a marine device, a medical instrument, a consumer good, an electronic device, armor, or manufacturing equipment, amongst other examples. In turn, equations describing physics-based behaviors of the one or more materials are defined in step 502. Following step 502, a stabilization equation is defined in step 503. According to an embodiment, the stabilization equation is a function of a non-linear deformation matrix $F$. Thereafter, a simulation of the real-world object subject to a load is performed at step 504 using (i) the defined computer-based model from step 501, (ii) the defined equations describing physics based-behaviors from step 502, and (iii) the defined stabilization equation from step 503.

An embodiment of the method 500 further includes, for each element of the plurality of elements of the defined model (defined at step 501), associating artificial internal forces with the element based on the defined stabilization equation (defined at step 503). Such an embodiment may further include, for each element of the plurality of elements, associating artificial-based and physics-based behavior(s) (i.e., a combined artificial and physics-based behavior) with the element based on the associated artificial internal forces.

The simulation of the real-world object subject to a load performed in step 503 can be performed using the artificial internal forces associated with each element and the artificial-based and physics-based behavior associated with each element. Further, according to an embodiment of the method 500, performing the simulation of the real-world object using the defined stabilization equation (at step 504) reduces a condition value associated with a given element of the plurality of elements. Further, in such an embodiment, the condition value is a function of the non-linear deformation gradient matrix.

Yet another embodiment of the method 500 updates the computer-based model based on the results of the simulation performed at step 504. Such an embodiment may perform a subsequent simulation to determine an updated physical behavior of the real-world object. According to an embodiment, this subsequent simulation is performed using the updated computer-based model, the defined equations describing physics-based behaviors, and the defined stabilization equation. Yet another embodiment may iterate, i.e., repeat, (i) updating the computer-based model based upon the determined updated physical behavior, and (ii) the determining the updated physical behavior, until the determined updated physical behavior satisfies a user defined criterion.

In an embodiment of the method 500, the model is defined at step 501 by taking measurements from one or more real-world objects. In this way, the model defined at step 501 represents the real-world object from which the measurements were obtained. In such an embodiment, the method 500 can be used to determine behavior of the real-world object and, design improvements to the real-world object itself. In such an embodiment, measurements of the object are used at step 501 to define the model, and the equations are defined at steps 502 and 503 based on properties of the real-world object. In turn, the simulation is performed at step 504 as described herein to determine results that indicate behavior of the real-world object. Based on these results, design changes to the real-world object can be determined and the real-world object itself can be modified in accordance with the determined changes, or the real-world object can be manufactured in accordance with the determined changes. Amongst other example implementations, such functionality may be used to determine a crashworthiness improvement for a vehicle. For instance, embodiments may determine during the simulation that a structural member of, for example, an automobile, fails when undergoing a deformation associated with a 60 miles-per-hour collision. Such an embodiment can be iterated using a model of the car with, for instance, a thicker structural member until a structural member thickness is determined that withstands the deformation associated with the collision. In turn, such an embodiment may continue by manufacturing the automobile with the structural member having the determined thickness. This process allows embodiments to determine appropriate design changes and manufacture real-world objects with those determined designs without the typical requirement for human trial-and-error.

A specific application of geometrical non-linear topology optimization involves modeling intermediate elements, or void elements, when the finite element model has stability issues. The present embodiments result in less solver iterations and less optimization iterations which results in (i) lower computational costs compared to previous methods and (ii) increase computational efficiency. Moreover, the primal solution solving does not fail, and a fully optimized design is achieved.

The present embodiments support numerical stabilization of the condition number for (i) all types of constitutive models applied in the modeling of physical systems and (ii) all types of shape functions applied in large deformation finite element modeling. Thereby, embodiments can be utilized for all finite element types; all physics modeling, including large deformations e.g., static, quasi-static, and transient modeling; and all types and combinations of numerical solver methods applied for determining the primal finite element solution.

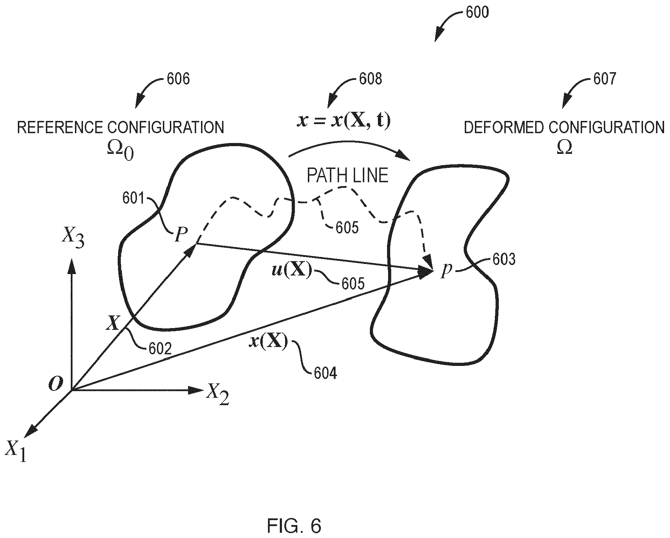

FIG. 6 shows a plot 600 which illustrates a path line 605 of a material particle $P$ 601 as it transitions from its reference configuration 606 ($P$ 601) to its deformed configuration 607 ($p$ 603). Plot 600 shows that a deformation gradient matrix $F$ 608 is defined following classic continuum theory, where the deformation of the material particle $P$ 601 in its unreformed state *X* 602 to deformed *p* 603 has the deformed state *x* 604.

Structural analyses describe the path that material particles in the structure take when loading is applied as seen in plot 600. A material particle *P* 601 initially at the position *X* 602 in the reference configuration 606 deforms to a new position *x* 604 during the analysis where the displacement is *u(X)* 605. The particle cannot disappear, since mass conservation is assumed and, therefore, the particle can be mapped as a one-to-one correspondence of:

$$x = x(X, t)$$

From this, an infinitesimal vector in the deformed configuration is expressed as:

$$dx = \frac{\partial x}{\partial X} dX$$

The transformation matrix is defined as the deformation gradient matrix *F* as the following:

$$F = \frac{\partial x}{\partial X}$$

Embodiments define a strain energy potential that correlates with a condition number of the deformation gradient *F* at a given material point. The motivation is that an ill-conditioned deformation gradient *F* causes the calculation of the right Cauchy-Green deformation tensor $C = F^T F$ to be ill-conditioned. Therefore, small changes in the deformation gradient result in large changes of the right Cauchy-Green deformation tensor. Consequently, the stresses and the nodal forces calculated from the right Cauchy-Green deformation tensor show a similar sensitivity for the deformation gradient entries. This ill-conditioning results in oscillations in the stresses at the material point, and ultimately in oscillations of the residual nodal forces of the Newton-Raphson iteration scheme, which is hindering the convergence. Therefore, the aim of the hyperelastic material model implemented by embodiments is to prevent the system from reaching states having ill-conditioned deformation gradients at the integration points.

The condition number induced by the Frobenius norm $\|\cdot\|_F$ is applied. This norm is chosen because this condition number can be expressed in terms of the two deviatoric invariants $\bar{I}_1$ and $\bar{I}_2$ of the right Cauchy-Green deformation tensor for the deformation gradient *F* and right Cauchy-Green deformation tensor *C* as:

$$\kappa_F(\mathbf{F}) = \sqrt{\bar{I}_1 \bar{I}_2}$$

$$\kappa_F(\mathbf{C}) \leq \bar{I}_1 \bar{I}_2$$

The condition number of the deformation gradient *F* induced by the Frobenius norm is:

$$\kappa_F(F) = \|F\|_F \cdot \|F^{-1}\|_F$$

These Frobenius norms can be expressed as the square roots of the traces of $F^T F$ and $F^{-T} F^{-1}$, where$(...)^{-T} = ((...)^T)^{-1} = ((...)^{-1})^T$, yielding:

$$\kappa_F(F) = \sqrt{Tr(F^T F)} \cdot \sqrt{Tr(F^{-T} F^{-1})}$$

For the trace of a matrix product of two matrices *A, B* it holds that *Tr(AB) = Tr(BA)*. Therefore, the last term in $\kappa_F(F)$ can be rewritten as:

$$\kappa_F(F) = \sqrt{Tr(F^T F)} \cdot \sqrt{Tr(F^{-1} F^{-T})}$$

Since, for two invertible matrices $A, B \in \mathbb{R}^{n \times n}$ it holds that $(AB)^{-1} = B^{-1}A^{-1}$, the last term in $\kappa_F(F)$ can be rewritten as:

$$\kappa_F(F) = \sqrt{Tr(F^T F)} \cdot \sqrt{Tr((F^T F)^{-1})}$$

Using the definition $C = F^T F$ of the right Cauchy-Green deformation tensor this expression yields:

$$\kappa_F(F) = \sqrt{Tr(C)} \cdot \sqrt{Tr(C^{-1})}$$

The trace of a regular square matrix $A \in \mathbb{R}^{n \times n}$ can be expressed as the sum of its eigenvalues:

$$Tr(A) = \sum_{i=1}^{n} \lambda_i \ \ for \ \lambda_i \in eig(A)$$

Furthermore, the relationship between the eigenvalues of an invertible matrix $A$ and its inverse $A^{-1}$ is:

$$\lambda_i = \frac{1}{\lambda_j} \ \ for \ \lambda_i \in eig(A), \lambda_j \in eig(A^{-1})$$

This is trivial, when taking into account the eigendecomposition of these two matrices. Applying these two equations to $\kappa_F(F)$ yields:

$$\kappa_F(F) = \sqrt{\sum_{i=1}^{n} eig(C)} \cdot \sqrt{\sum_{i=1}^{n} \frac{1}{eig(C)}}$$

The eigenvalues of $C$ are defined in the finite strain theory as the squared principle stretches $\lambda_i^2$:

$$eig(C) = \{\lambda_1^2, \lambda_2^2, \lambda_3^2\}$$

Applying the principle stretch definition to $\kappa_F(F)$ yields:

$$\kappa_F(F) = \sqrt{\lambda_1^2 + \lambda_2^2 + \lambda_3^2} \cdot \sqrt{\frac{1}{\lambda_1^2} + \frac{1}{\lambda_2^2} + \frac{1}{\lambda_3^2}}$$

Rearranging the definition of the deviatoric principle stretches for the principle stretches yields:

$$\bar{\lambda}_i = (\lambda_1 \lambda_2 \lambda_3)^{-\frac{1}{3}} \lambda_i \Rightarrow \lambda_i = (\lambda_1 \lambda_2 \lambda_3)^{\frac{1}{3}} \bar{\lambda}_i$$

Substituting $\lambda_i$ in $\kappa_F(F)$ with $(\lambda_1\lambda_2\lambda_3)^{\frac{1}{3}}\bar{\lambda}_i$ yields:

$$\kappa_F(F) = \sqrt{\bar{\lambda}_1^2 + \bar{\lambda}_2^2 + \bar{\lambda}_3^2} \cdot \sqrt{\frac{1}{\bar{\lambda}_1^2} + \frac{1}{\bar{\lambda}_2^2} + \frac{1}{\bar{\lambda}_3^2}}$$

The invariants $\bar{I}_1$ and $\bar{I}_2$ are defined as:

$$\bar{I}_1 = \bar{\lambda}_1^2 + \bar{\lambda}_2^2 + \bar{\lambda}_3^2$$
$$\bar{I}_2 = \frac{1}{\bar{\lambda}_1^2} + \frac{1}{\bar{\lambda}_2^2} + \frac{1}{\bar{\lambda}_3^2}$$

Substituting $\bar{I}_1$ and $\bar{I}_2$ in $\kappa_F(F)$ finally yields:

$$\kappa_F(F) = \sqrt{\bar{I}_1} \cdot \sqrt{\bar{I}_2}$$

Consequently, an upper bound on the condition number $\kappa\_F$ (C) is estimated as:

$$\kappa_F(C) \leq \left(\kappa_F(F)\right) \cdot \left(\kappa_F(F)\right) = \bar{I}_1\bar{I}_2$$

It is noted that $\kappa_F(F)$ can be simplified in a similar fashion using the principle stretches $\lambda_i$ instead of the deviatoric stretches $\bar{\lambda}_i$. This implies that the condition number of $\kappa_F(F)$ and $\kappa_F(C)$ are not dependent on volumetric stretches. Thereby, they do not influence the numerical stability on a constitutive material model level. Although, excessive volumetric compression or tension can lead to convergence issues due to rounding errors in other parts of the finite element method.

An embodiment shows possible artificial constitutive material candidates addressing the condition number $\kappa_F(C)$ using the two deviatoric invariants $\bar{I}_1$ and $\bar{I}_2$. However, other candidates may be applied.

A possible set of general artificial constitutive material candidates addressing the condition number $\kappa_F(C)$ can depend upon the two deviatoric invariants $\bar{I}_1$ and $\bar{I}_2$ of C, as well as the third invariant $J^{el}$ of C defined by:

$$J^{el} = \lambda_1\lambda_2\lambda_3$$

Thereby, one set (N=1, N=2, etc.) of possible implemented artificial constitutive material models for a condition number based strain energy potential is:

$$U = \sum_{i=1}^{N} C_{\kappa,i} \cdot \left(\bar{I}_1\bar{I}_2 - 9\right)^i + \sum_{i=1}^{2N} \frac{1}{D_i} \cdot (J^{el} - 1)^{2i},$$

In which $\bar{I}_1\bar{I}_1 \geq \kappa_F(C)$ incorporates the condition number into the strain energy potential. The strain energy potential applied in the examples described hereinbelow is a simplified version of this form ($C_{\kappa,1} := C_\kappa$, $D_2 := D$), yielding:

$$U = C_\kappa \cdot \left(\bar{I}_1\bar{I}_2 - 9\right) + \frac{1}{D} \cdot (J^{el} - 1)^4$$

The disclosed proofs and equations show that embodiments depend on the deformation matrix *F* representing the kinematics, and not on the constitutive material model of the physical system. Thereby, the embodiments support numerical stabilization of physical systems consisting of all types of constitutive models (such as elasticity, plasticity, viscoelastic, viscoplastic, hyperelastic, damage, geomechanics, micromechanics, etc.) and isotropic orthotropic and anisotropic models and, moreover, embodiments are not limited to these physical constitutive material models.

The disclosed proofs and equations also show that embodiments support all types of shape functions applied in large deformation finite element modeling. Thereby, embodiments can be used with all finite element types such as 2D or 3D elements; as well as 1st order, 2nd order and higher-order elements; triangle, quadrangle, tetrahedron, hexahedron, pentahedron, pyramid elements, etc.; and Continuum, shell, membrane, beam elements, etc. Further, it is noted that embodiments are not limited to these element types. The disclosed proofs and equations also show that embodiments support all types of physics modeling including large deformations as static, quasi-static, and transient modeling.

The disclosed proofs and equations also show that embodiments support all types and combinations of numerical solver methods applied for determining primal finite element solutions such as, but not limited to, implicit, explicit, and hybrid methods; factorization of operators using direct solver or iterative solvers using preconditioners; Newton-Raphson procedures or incremental-iterative techniques; incremental loading; integration in time using first-order methods (e.g., Backward Euler), second-order methods (e.g., Newmark-beta), or higher-order methods (e.g., Runge-Kutta).

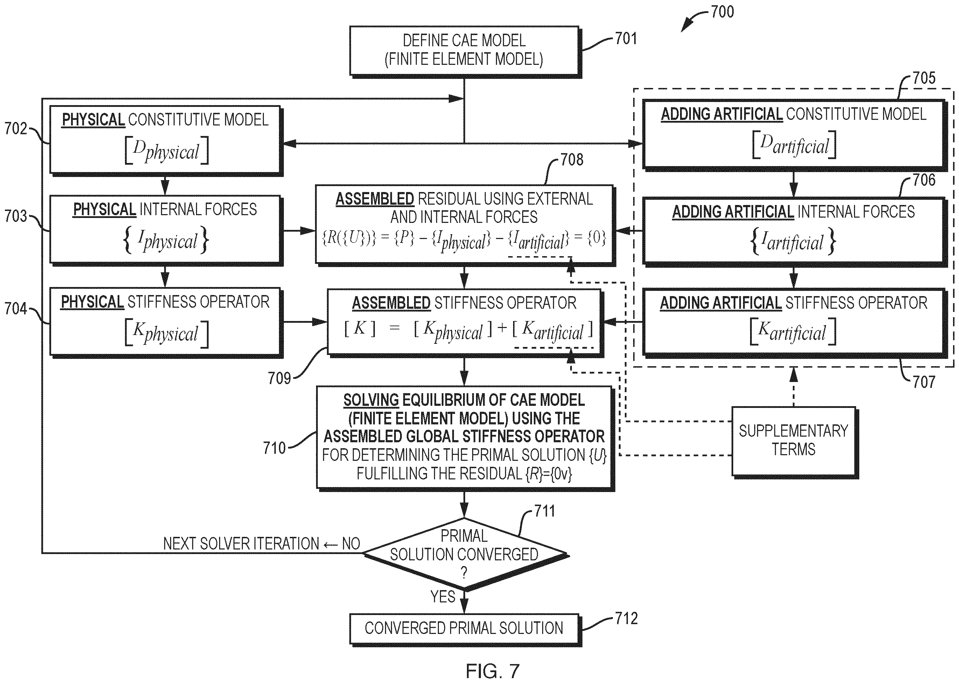

FIG. 7 is a flowchart of a workflow 700 for simulating a real-world object to determine behavior of the object. The workflow 700 is a theoretical implementation of the workflow 400 described hereinabove in relation to FIG. 4. The workflow 700 starts at step 701 with defining a computer-based model, e.g., a finite element model. After defining the model at step 701, the method 700 continues to steps 702 and 705. At step 705, an artificial constitutive model is added to the finite element model defined at step 701. Then, at step 706 an artificial internal force is added to the artificial constitutive model defined at step 705. The artificial internal forces added at step 706 includes forces based upon stresses calculated using the artificial constitutive model of step 705. Embodiments then add artificial stiffness operators to the artificial constitutive model at step 707 based upon the artificial internal forces of step 706. In the other path of the workflow 770, at step 702, a physical constitutive model is added to the finite element model defined at 701. In turn, physical internal forces are added to the physical constitutive model at step 703. The physical internal forces are based upon stresses calculated using the physical constitutive model from step 702. To continue, a physical stiffness operator is added, at step 704, to the physical internal forces (added at step 703). The physical stiffness operator added at step 704 is based upon the physical internal forces added at step 703. At step 708 both the physical internal forces added at step 703 and the artificial internal forces added at step 706 are assembled into a residual. Similarly, both the physical stiffness operator from step 704 and the artificial stiffness operator from step 707 are assembled into a stiffness operator at step 709. In turn, at step 710, the method 700 solves for a primal solution and equilibrium of the finite element model using the global stiffness operator assembled at step 709. The workflow 700 then checks, at step 711, if the primal solution has converged. If the primal solution did not converge, the method 700 returns to step 702 and 705 and repeats steps 702-711. If, at step 711, it is determined that the solution converged, the workflow 700 results in a converged primal solution at step 712 and the method 700 ends.

The workflow 700 of FIG. 7 is a theoretical implementation of the workflow 400 described hereinabove in relation to FIG. 4. In the workflow 700, steps 701, 702, 703, 704, 711 and 712 are steps that may be part of a standard non-linear CAE workflow (finite element modeling workflow). In addition to steps 701, 702, 703, 704, 711, and 712, the method 700 includes steps 705-710 to eliminate numerical instabilities and ill-conditioned elemental stiffness operators. Specifically, the method 700 adds artificial pseudo-constitutive modeling at step 705 using the condition number of the non-linear deformation matrix F at the elemental integration points, adds artificial internal forces at step 706, and adds an artificial stiffness operator at step 707. In the method 700, at step 708, a residual defining the structural equilibrium is assembled using the physical internal forces from step 703 and the artificial internal forces from step 706. The physical stiffness operator 704 and the artificial stiffness operator 707 are assembled at step 709 yielding the total structural stiffness operator. Afterwards, the primal solution is determined at step 710 using the assembled residual from step 708 and the assembled stiffness operator from step 709. At step 711, a check is performed to determine if the solution is converged. If the solution is not converged, then an additional solver iteration is performed and the method 700 moves back to steps 702 and 705 and, if the solution is converged, the method 700 moves to step 712.

The assembled residual $\{R\}$ of the equilibrium for the system defined in step 708 consists of the external forces $\{P\}$ (e.g., an applied load), the internal forces $\{I_{physical}\}$ for the physical system (from step 703) and the internal forces $\{I_{artificial}\}$ (from step 706) for the added artificial pseudo-constitutive modeling. The assembled residual $\{R\}$ in 708 may also include other forces for example, contact forces, inertia forces, and thermal loading, amongst other examples.

The internal forces, $\{\underline{I}_{physical}\}$ and $\{I_{artifical}\}$ are a function of the field $\{U\}$ for the primal solution and determined by summing up the elemental forces $\{i_e\}$ over all finite elements (e=1,2,...,Nel) defined in the model yielding:

$$\left\{I_{physical}\right\} = \sum_{e=1}^{Nel}\left\{i_{physical,e}\left(\left[D_{physical}\left(\{U\},\{\alpha\}\right)\right],\{U\}\right)\right\}$$

$$\left\{I_{artificial}\right\} = \sum_{e=1}^{Nel}\left\{i_{artificical,e}\left(\left[D_{artificial}\left(\{U\}\right)\right],\{U\}\right)\right\}$$

where $[D_{physical}]$ and $[D_{artificial}]$ are the constitutive modeling for the physical system and the added artificial constitutive modeling, respectively. The physical constitutive modeling can also be a function of the state variables $\{\alpha\}$, e.g. for plasticity.

Generally, the embodiments enforce the overall physical internal forces to be significantly larger than artificial internal forces ($\{I_{physical}\} >> \{I_{artificial}\}$) so the overall primal solution $\{U\}$ is not changed due to the added artificial constitutive modeling. However, for the few artificial ill-conditioned low stiffness elements, embodiments add artificial internal forces due to the artificial stresses of the added artificial constitutive modeling. Thereby, the elemental physical internal forces are lower than the artificial elemental forces ($\{i_{physical,e}\} < \{i_{artificial,e}\}$) for these few elements on an elemental level, but they do not change the overall primal solution $\{U\}$.

Thus, the global stiffness operator $[K]$ assembled at step 709 and used in step 710 for determining the geometrical non-linear primal solution $\{U\}$ that fulfils the residual $\{R\}=\{0\}$, is derived using the partial derivative with respect to the primal solution $\{U\}$ as the following:

$$[K] = \frac{\partial\left\{I_{physical}\right\}}{\partial\{U\}} + \frac{\partial\left\{I_{artificial}\right\}}{\partial\{U\}}$$

where

$$\frac{\partial\left\{I_{physical}\right\}}{\partial\{U\}} = [K_{physical}] = \sum_{e=1}^{Nel}\left[k_{physical,e}\left(\left[D_{physical}\left(\{U\},\{\alpha\}\right)\right],\{U\}\right)\right]$$

$$\frac{\partial\left\{I_{artificial}\right\}}{\partial\{U\}} = [K_{artificial}] = \sum_{e=1}^{Nel}\left[k_{artificial,e}\left(\left[D_{artificial}\left(\{U\}\right)\right],\{U\}\right)\right]$$

Embodiments introduce artificial elemental forces $\{i_{artificial,e}\}$ in a direction that minimizes the condition number of the stiffness assembled operator $[K]$ by adding the artificial elemental stiffness operators $[k_{artificial,e}]$ for a few critical elements to the physical elemental stiffness operator $[k_{physical,e}]$, and do not simply increase the stiffness in every direction of a given element.

The artificial elemental stiffness operators $[k_{artificial,e}]$ of embodiments do not introduce so much stiffness that the overall global physical buckling (bifurcation point) given by the physical stiffness operator $[K_{physical}]$ is altered.

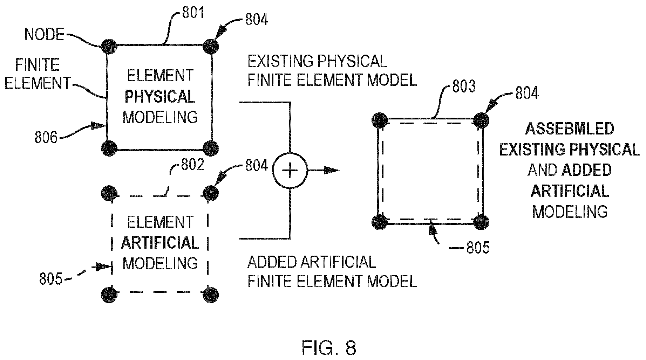

The example workflows 400 shown in FIG. 4 and 700 shown in FIG. 7 can be implemented in the source code of a finite element (or CAE) system. Embodiments can also be implemented in a non-intrusive manner if an existing finite element system already supports one or more of the artificial constitutive material models based upon invariants for large deformation modeling. The non-intrusive manner was chosen for the implementation results described hereinbelow where embodiments were implemented using the finite element solver Abaqus® provided by Applicant. An example of this non-intrusive implementation is shown in FIG. 8 where each finite element of the physical model is duplicated into a new artificial finite element using the artificial constitutive material model. The duplicated artificial finite element has a new element-ID but maintains the node-IDs of the duplicated physical finite element. Thereby, the artificial constitutive material modeling is consistently added to the physical constitutive material modeling. The assembled finite element system superimposes the behavior of the original physical system and the added artificial stabilization so as to enforce well-conditioned global operators. The embodiment implemented in Abaqus® supports all arbitrary element types.

FIG. 8 shows an example embodiment implemented in an existing geometrical non-linear finite element solver. In FIG. 8 finite element 801 represents element physical modeling, finite element 802 represents element artificial modeling, and finite element 803 represents an assembly of the physical finite element modeling 801 and artificial finite element modeling 803. Each finite element of the physical model 801 is duplicated into a new artificial finite element 802 using the artificial constitutive material model. The duplicated artificial finite element has a new element-ID 805 (the edge boundary of the finite element), but maintains the node-IDs (e.g., nodes 804), as shown in 803, of the duplicated physical finite element.

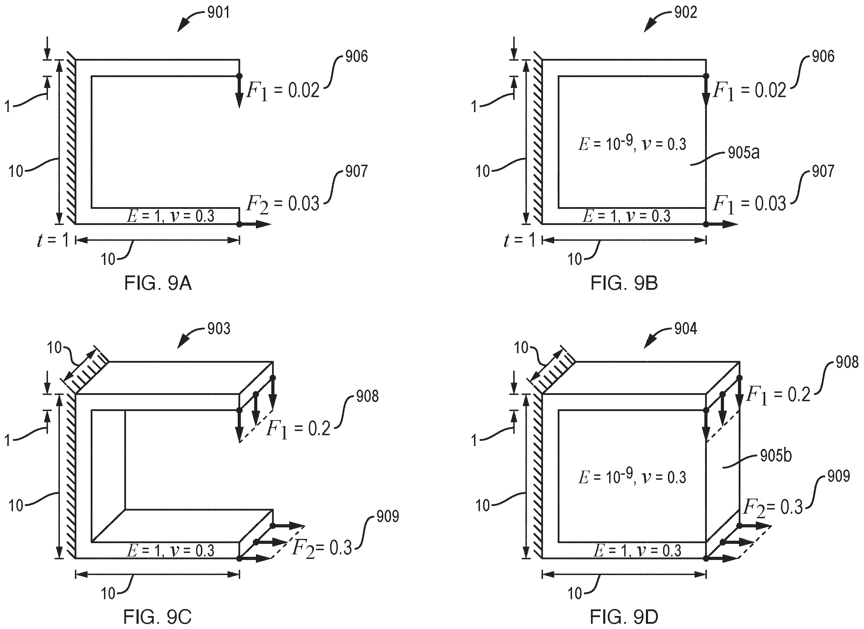

FIGs. 9A - 9D show example C-shaped structures, in both 2D models 901-902 and 3D models 903-904, used to verify operation of embodiments, e.g., method 400. To verify the operation of embodiments, artificial constitutive material modeling 905a-b was added within the C-shaped structures 902 and 904 to stabilize numerical instabilities of the finite elements for the void regions 905a-b which have a significantly lower stiffness. The strictly solid (without artificial constitutive material modeling) models 901 and 903 are reference models for comparison to the solid-void (with artificial constitutive material modeling) models 902 and 904. Comparing simulation results for the models 901 and 903 (with an open void) with simulation results for the models 902 and 904, verifies embodiments, as the void regions 905a-b do not influence the global system behavior and responses compared to the strictly solid models 901 and 903.

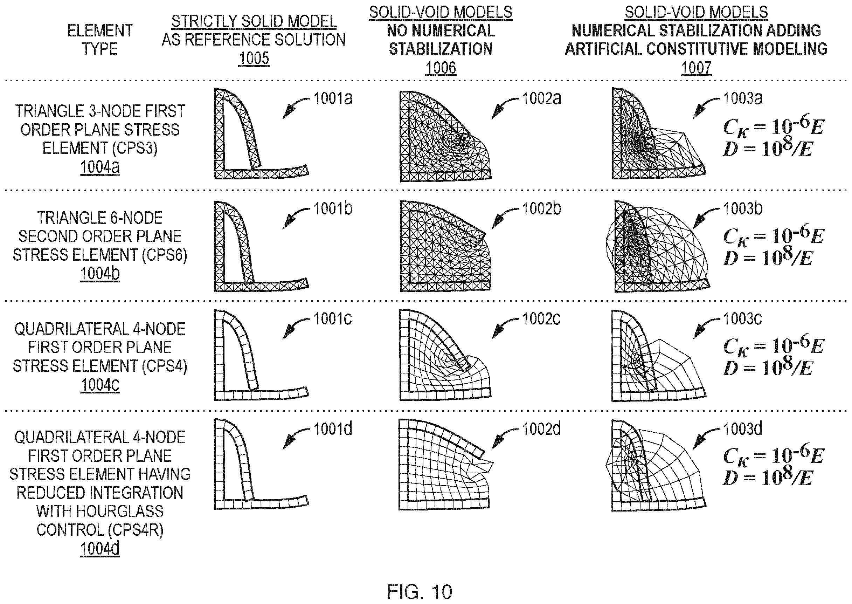

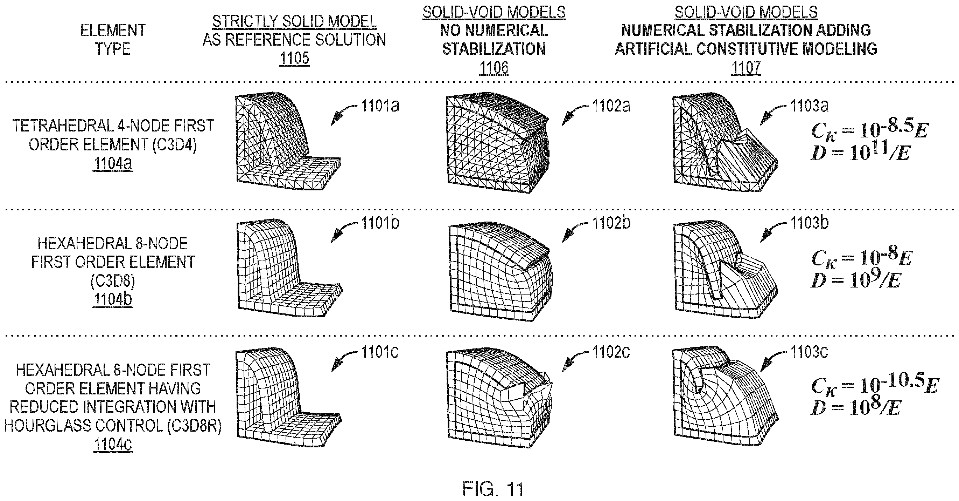

This verification was done using 2D finite element modeling (models 901 and 902) and 3D finite element modeling (models 903 and 904). To determine these results (described hereinbelow in relation to FIGs. 10 and 11), the models 901-904 were fully constrained on the left side and loaded at the two corners on the right by the forces $F_1$ = 0.02 906 and $F_2$ = 0.03 907 for the 2D-models 901 and 902 and $F_1$ = 0.2 908 and $F_2$ = 0.3 909 for the 3D-models 903 and 904. The models 901-904 are kept dimensionless using the dimensions 10x10x1 and a thickness of 1 for the 2D models 901 and 902, and the dimensions 10x10x10 for the 3D models 903 and 904.

The solid material (making up the C-shaped structures) in FIGs. 9A - 9D is modelled as a linear elastic material having a Young modulus $E_s$ = 1 and Poisson's ratio $v$ = 0.3. There are two different versions of the model: a strictly solid model, 901 and 903, and a combined solid-void model, 902 and 904. The solid models 901 and 903 only include the C-shaped solid region. The solid-void models 902 and 904 consist of the solid C-shaped region, which additionally encapsulates significantly softer void regions 905a-b. The void material 905a-b is identical to the solid material except that the Young modulus of the void material 905a-b is significantly lower, $E_v$ = 10$^{-9}$. Thereby, the void region should not influence the global system behavior and response, but the finite elements of the void region are prone to numerical instabilities due to local artificial numerical instabilities and bifurcations. Therefore, FIGs. 9A-D show that embodiments can numerically stabilize the void elements of the solid-void models 902 and 904 without practically changing the determined behavior and response of the global system. Thus, the solutions and responses determined using the solid models 901 and 903 are reference solutions for the system behavior to verify that the solutions and responses determined using embodiments in models 902 and 904 match.

FIG. 10 shows 2D structures 1001a-d, 1002a-d, and 1003a-d (where structures 1001a-d correspond to structure 901 and structures 1002a-d and 1003a-d correspond to structure 902, where embodiments were applied to structures 1003a-d) that were used in simulations to verify embodiments for four different element types. The four element types used were triangle 3-node first order plain stress element (CPS3) 1004a; triangle 6-node second order plane stress element (CPS6) 1004b; quadrilateral 4-node first order plane stress element (CPS4) 1004c; and quadrilateral 4-node first order plane stress element having reduced integration with hourglass control (CPS4) 1004d. First column 1005 shows the strictly solid models 1001a-d as a reference solution for the primal solutions of the four element types 1004a-d. Second column 1006 shows the structural responses for the solid-void models 1002a-d using no numerical stabilization. For models 1002a-d, where no numerical stabilization is applied, the finite element solving of the primal solution, for the four element types 1004a-d, numerically fails before the final deformations are determined (unlike the results shown in column 1007). Third column 1007 shows the structural responses for the solid-void models 1003a-d, of the four element types 1004a-d where numerical stabilization is applied in accordance with embodiments. The structural responses in column 1007 numerically and practically match the final deformations shown in column 1005. As such, the application of embodiments to 2D models does not modify results where there are no instabilities, but where there are instabilities, e.g., column 1006, embodiments successfully determine simulation results.

FIG. 11 shows 3D structures 1101a-c, 1102a-c, and 1103a-c (where structures 1101a-c correspond to structure 903 and structures 1102a-c and 1103a-c correspond to structure 904, where embodiments were applied to structures 1103a-c) that were used in simulations to verify embodiments for three different element types. The three element types being tetrahedral 4-node first order element (C3D4) 1104a; hexahedral 8-node first order element (C3D8) 1104b; and hexahedral 8-node first order element having reduced integration with hourglass control (C3D8R) 1104c. First column 1105 shows the strictly solid models 1101a-c as a reference solution for the primal solutions. Second column 1106 shows the structural responses for the solid-void models 1102a-c were no numerical stabilization was implemented and, as such, the finite element solving of the primal solution numerically failed before the final deformations were determined (unlike the results shown in column 1107). Third column 1107 shows the structural responses for the solid-void models 1103a-c where numerical stabilization was implemented in accordance with the embodiments described herein. The results in column 1107 for models 1103a-c numerically and practically match the results in column 1107 for the strictly solid models 1101a-c. As such, the application of embodiments to 3D models does not modify results where there are no instabilities, but where there are instabilities, e.g., column 1106, embodiments successfully determine simulation results.

The numerical experiments and findings in FIGs. 10 and 11 verify embodiments for different element types (1004a-d and 1104a-c) and 2D and 3D elements. Additionally, the embodiments have no practical influence on the modeling quality of the predicted global physical response and behavior. This is shown by the similarity of the results in columns 1005 and 1007 and the results in columns 1105 and 1107. Secondly, embodiments enable successful simulations where large deformations occur involving elements with different stiffness's in contrast to methods that apply no stabilization. This is shown in FIG. 10 where the simulations of column 1006 failed and the simulations of column 1007 were successful and in FIG. 11 where the simulations of column 1106 failed and the simulations of column 1107 were successful.

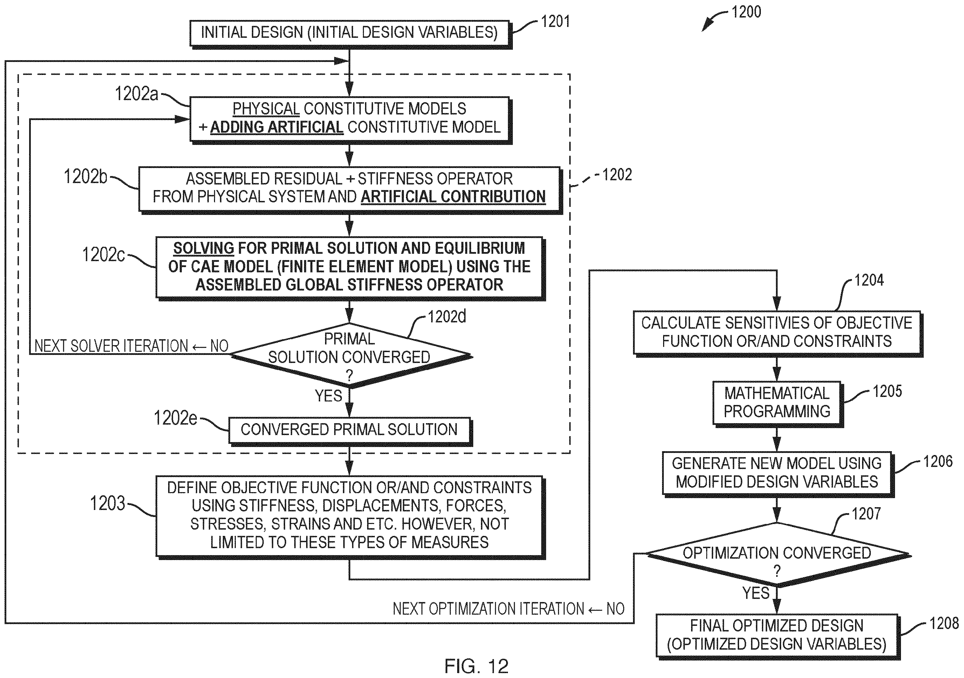

An application of embodiments is in the context of geometrical non-linear optimization where the condition number of the stiffness operator can change significantly from one optimization iteration to another other optimization iteration. The issue of local numerical instabilities is particularly pronounced for geometrical non-linear topology optimization workflows because a solid-void material layout is enforced, which has a high stiffness ratio between void material and solid material. FIG. 12 shows an example whereby embodiments for artificial constitutive modeling for numerical stabilization of the void elements (flexible elements) can be implemented in a geometrical non-linear topology optimization workflow 1200.

FIG. 12 illustrates a workflow of a design optimization process 1200 based upon sensitivities according to an embodiment. Design implementation workflow 1200 implements the artificial constitutive numerical stabilization 1202, as described hereinabove in relation to workflows 400, 500, and 700 of FIGs. 4, 5, and 7, respectively, along with the additional steps 1203-1208.

The optimization workflow 1200 starts at step 1201 with an initial design described by an initial set of the design variables. Then, at step 1202 the primal solution, including the artificial constitutive modeling for numerical stabilization, is determined for each optimization design iteration. Each optimization design iteration begins with taking the initial design variables from 1201 and, at step 1202a, adding the artificial constitutive model to the physical constitutive model. At step 1202b the physical model and artificial model from step 1202a are used to assemble a residual and stiffness operator. Next, step 1202c solves for the primal solution and equilibrium of the CAE model (finite element model) using the assembled global stiffness operator from step 1202b. Step 1202d checks if the primal solution has converged. If, at step 1202d it is determined that the solution converged, the iteration results in a converged primal solution moves to step 1202e. If, at step 1202d, it is determined that the primal solution has not converged, then the workflow returns to step 1202a.

After the sub-steps 1202a-e, a converged primal solution is determined, and the method 1200 moves to step 1203 where values of an objective function and constraints are determined. Non-limiting examples of values for the objective function and the constraints include direct measures of the model (e.g., mass, center of gravity, etc.) or measures determined by results of the primal solution (e.g., stiffness, displacements, forces, stresses, strains, etc.).

Next, at step 1204, sensitivities of the objective function and constraints are calculated. In an embodiment, the sensitivities of the objective function and the constraints based upon the primal solution are calculated at step 1204 using direct or adjoint methods, and implemented in the kernel of Abaqus[®].

To continue, the optimization problem is solved using mathematical programming, i.e., optimization computation, at step 1205. According to an embodiment, the mathematical programming is strictly based upon values of user defined design targets for the objective function and constraints. Further, it is noted that in mathematics, computer science, and operations research, mathematical programming is alternatively named mathematical optimization or simply optimization and is a process of the selection of a best solution (with regard to some criterion) from some set of available alternatives. Embodiments of the method 1200 may use any such mathematical programming as is known in the art.

A new physical model for the next optimization iteration is generated at step 1206 based upon the design variable values found at step 1205. It is noted, that in embodiments, the design variables (determined at step 1205) and the physical model variables (updated at step 1206) may be the same, as for example, thickness design variables for sizing optimization. However, the design variables and the physical model variables may also be different as for example density topology optimization where the design variables are relative densities that are mapped to the physical densities and stiffness.

Step 1207 checks if the optimization converged. If the optimization has not converged, the method 1200 returns to step 1202 and a new optimization iteration is started. If the optimization has converged, the optimization workflow 1200 moves to step 1208 and outputs the final design. According to an embodiment, the optimization workflow is converged when the convergence criteria for the change in objective is e.g., less than 0.1% and the change in design variables is less than e.g., 0.5%.

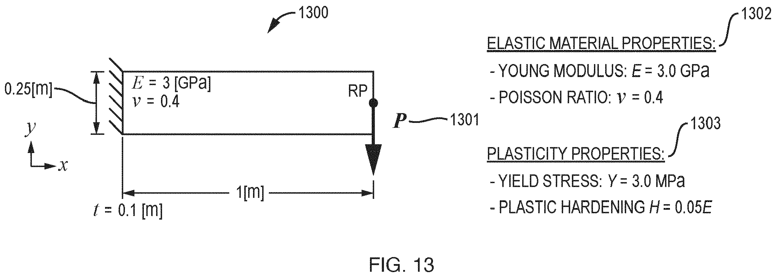

FIG. 13 represents a geometrical non-linear topology optimization benchmark model 1300 of which two versions are defined: one applying strictly elastic material properties 1302 and the other applying elastoplastic material properties, i.e., the elastic material properties 1302 and the plasticity material properties 1303. The model 1300 is clamped at the right side and has an applied load $P$ 1301 in the y-direction at the mid-right side. The model 1300 consists of 3,600 quadrilateral 4-node first order plane strain elements (CPE4).

An example implementation applies the optimization workflow 1200 to the model 1300 for topology optimization. The objective function of the optimization minimizes displacement in the loading direction at the force $P$ 1301 subject to a relative mass constraint of 50% for the design domain. Thereby, the stiffness of the model 1300 is maximized for a given mass. The design domain is defined as the entire model 1300 where each finite element is a design variable in the topology optimization for determining the new optimized conceptual material layout in the design domain.

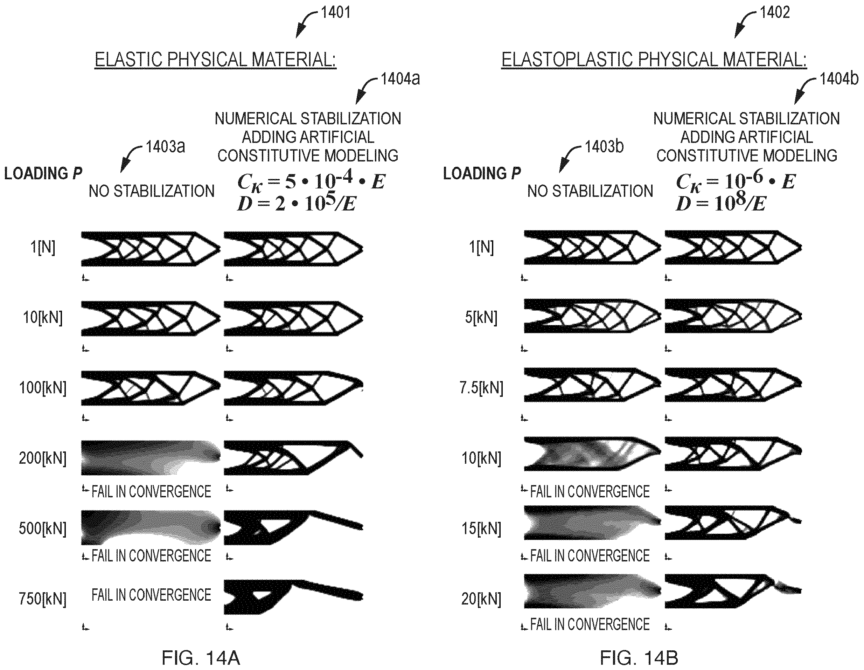

FIGs. 14A and 14B show results of the geometrical non-linear topology optimization for the stiffness optimization problem of the two versions of the model 1300 described hereinabove in relation to FIG. 13. The optimization workflow 1200 was applied to determine the different optimization results in FIG. 14. Specifically, the results shown in the columns 1403a-b were generated without applying numerical stabilization at step 1202. The results in columns 1404a-b were generated by applying numerical stabilization through use of artificial constitutive modeling at step 1202. The results in columns 1403a-b and 1404a-b show different designs obtained for different loading magnitudes. The numerical experiments show, for the geometrical non-linear topology optimization results in FIGs. 14A and 14B, that the strictly elastic optimized designs 1401 (i.e., the results generated using a version of the model 1300 applying strictly elastic material properties 1302) fail in optimization convergence at load magnitudes higher than $P$=100 kN when applying no numerical stabilization (column 1403a), and the elastoplastic optimized designs 1402 (i.e., the results generated using a version of the model 1300 applying elastoplastic material properties, i.e., the elastic material properties 1302 and the plasticity material properties 1303) fail in optimization convergence at load magnitudes higher than $P$=7.5 kN when applying no numerical stabilization (column 1403b). In contrast, all optimization cases that applied numerical stabilization by adding artificial constitutive material modeling according to an embodiment in step 1202 converge in finding optimized designs (columns 1404a-b).

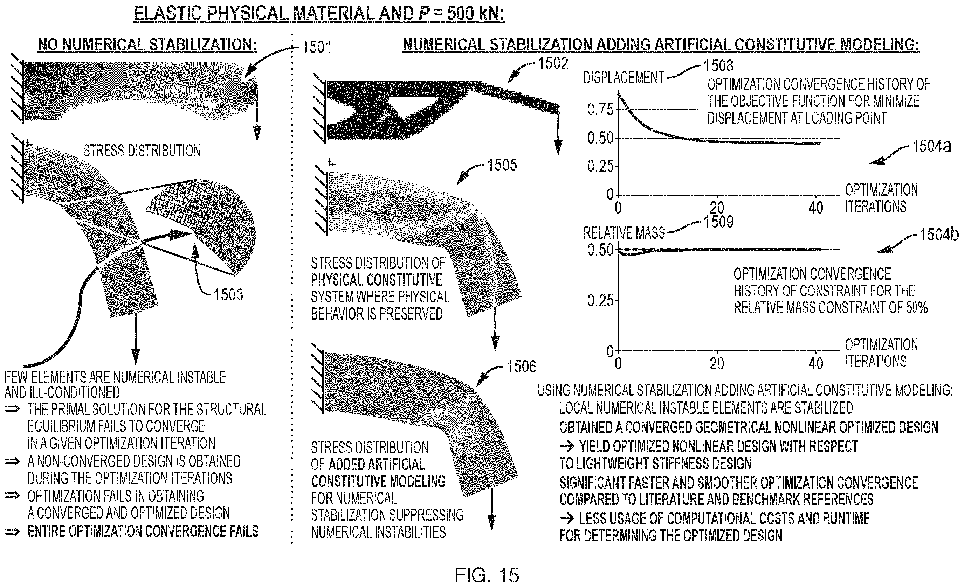

FIG. 15 shows two elastic topology optimized designs 1501 and 1502 where the models were subject to a loading magnitude of $P$= 500 kN. FIG. 15 further illustrates the results of the 500 kN load from columns 1403a and 1404b of FIG. 14 where no numerical stabilization was applied (column 1403a and 1501) and where numerical stabilization was applied by adding artificial constitutive modeling (column 1404a and 1502). FIG. 15 shows that the optimization workflow having no numerical stabilization 1501 fails in the primal solution during the optimization iterations, as finite elements are numerically instable and ill-conditioned (as shown in enlarged view 1503). Thus, the entire optimization workflow where stabilization is not applied fails in optimization convergence. The optimization workflow having numerical stabilization by adding artificial constitutive modeling 1502 converges to an optimized design. Additionally, the optimization iteration history is shown in plots 1504a-b for the added artificial constitutive modeling.

Further, FIG. 15 includes plots 1504a and 1504b of optimization iteration history. Specifically, plot 1504a shows displacement 1508 versus optimization iterations 1507a and plot 1504b shows relative mass 1509 versus optimization iterations 1507b for displacement 1507. The plots 1504a-b show a smooth convergence in the objective and also illustrate that few optimization iterations are needed and, as such, computational costs are low. FIG. 15 also shows a stress distribution of the physical constitutive material model 1505 and a stress distribution of the added artificial constitutive modeling 1506. The stress scaling is different for the shown two stress distributions 1505 and 1506. The solid parts of the optimized design mainly transmit the physical stresses, whereas the stress by the added artificial constitutive modeling are only present at the locations and directions where needed for ensuring a well-conditioned global operator and numerical stability.

The optimization results illustrated in FIGs. 14 and 15 yield the following conclusions regarding embodiments. First, embodiments support numerical stabilization of physical systems consisting of both elastic and elastoplastic constitutive material models. More generally, embodiments are appropriate for all types of physical constitutive models. Second, embodiments only add stresses and thereby, stiffness, at the locations and directions where needed for numerical stabilization. Thereby, embodiments locally stabilize the ill-conditioned parts of a model by adding an additional artificial constitutive modeling to the physical constitutive model that does not change the overall stiffness of the system. As discussed above, many previous approaches add an overall stiffness to the model at all locations and directions and thereby, also at locations and direction where additional stiffness is not needed. Third, when embodiments are applied in geometrical non-linear topology optimization workflows, embodiments do not depend upon the design variables, but depend strictly on the deformation of the primal solution of the structural layout during the optimization iterations. Therefore, heuristic schemes and heuristic parameters depending upon the design variables are not modified during the optimization iterations. This results in needing significantly less optimization iterations. Because embodiments need fewer iterations, embodiments have lower computational costs and have significantly faster and smoother optimization convergence compared to previous and benchmark references. Further, embodiments have a shorter runtime to determine an optimized design. Embodiments outperform all previous numerical stabilization methods in terms of the number of optimization iterations to achieve an optimized geometrical non-linear design. Further, embodiments prevent the optimization from failing to convergence when a few elements of the physical system are numerically unstable and ill-conditioned for the primal solution of the structural equilibrium in a given optimization iteration.

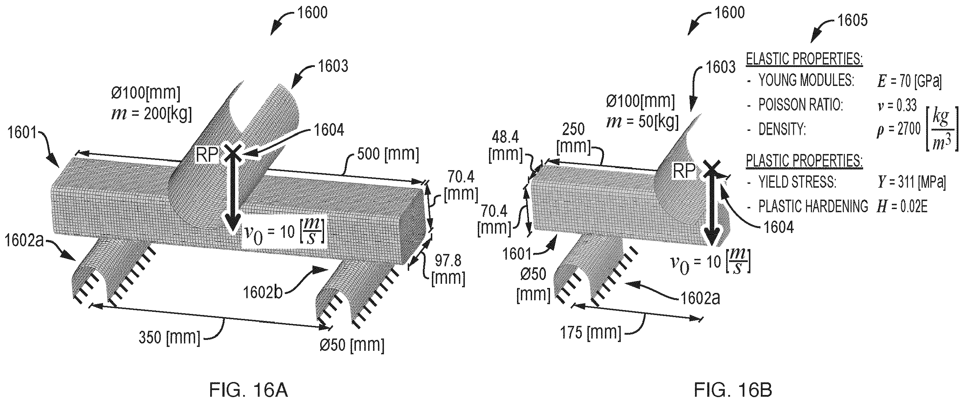

FIGs. 16A and 16B show a geometrical non-linear transient 3D topology optimization, where elastoplastic material properties 1605 are defined for the finite element model 1600.

In FIGs. 16A and 16B the model 1600 includes a flexible beam 1601 placed on two rigid supports 1602a-b and the middle of the beam 1601 is exposed to a moving rigid punch 1603. The supports 1602a-b are fully constrained while the punch 1603 moves freely in the vertical direction and has an initial velocity of $v_0 = 10m/s$ and a mass of $m = 200$ *kg.* The beam 1601 is not constrained. The contacts between the four bodies (beam 1601, supports 1602a-b, and punch 1603) have a friction coefficient of $\mu = 0.1$. The elastoplastic material properties 1605 are defined for the material of the beam 1601 while the two lower supports 1602a-b and punch 1603 are all assumed to be rigid. In an implementation, the model 1600 is reduced to a quarter by applying two planes of symmetry as shown in FIG. 16B. The quarter beam is discretized using 13,482 C3D8 linear hexahedral elements. FIG 16A represents a full model 1600a, and 16B represents a reduced model 1600b by applying symmetry.

In an implementation, the optimization workflow in 1200 is applied for the topology optimization to the model 1600. The objective function of the optimization is to minimize the maximal vertical displacement over time of the reference point RP 1604 for the punch 1603 at 25 discrete time points $t_i \in \{0.001, 0.002, ... 0.025\}$. Additionally, a relative mass constraint of 30% for the design domain is enforced. Thereby, the dynamic stiffness is maximized for a given mass. The design domain for the topology optimization is defined as the entire flexible beam 1601 where each finite element is a design variable in the topology optimization for determining a new optimized conceptual material layout.

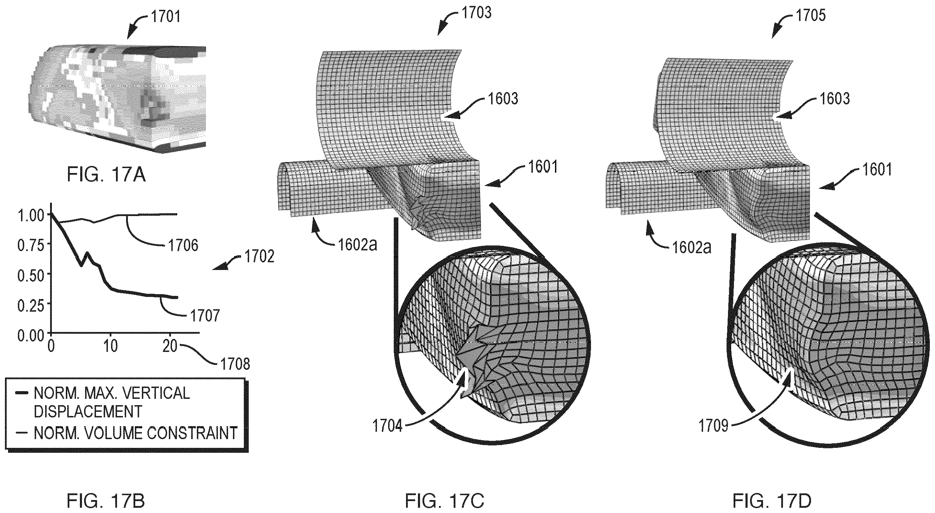

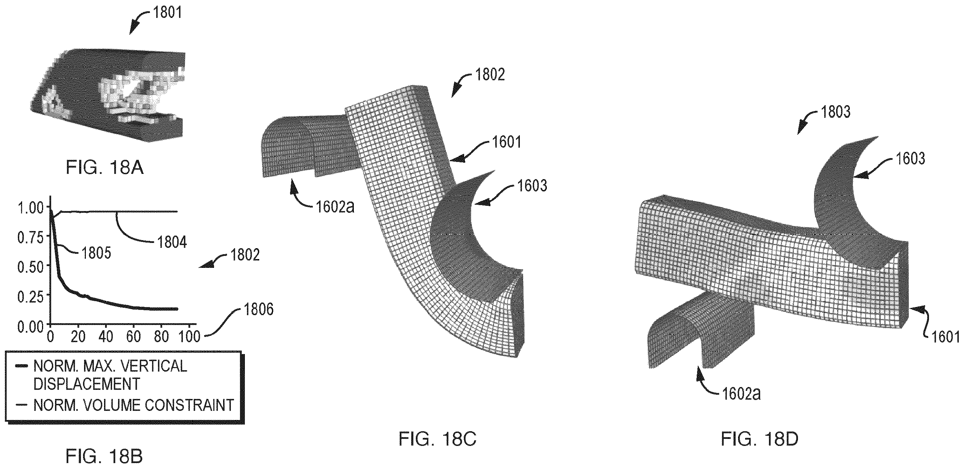

The results for the geometrical non-linear topology optimization for the dynamic stiffness optimization problem described hereinabove in relation to FIGs. 16A and 16B are shown in FIGs. 17A - 17D and FIGs. 18A - 18D

FIG. 17A depicts a 3D model 1701 representing a density design layout of a failed optimization iteration (specifically iteration number 22) in the implementation where no numerical stabilization was applied. FIG. 17B is a plot 1702 representing an optimization iteration history showing the normalized maximal vertical displacement objective function value 1706 and normalized volume constraint value 1707 as a function of the optimization iterations 1708. FIG. 17C shows a 3D model 1703, the same 3D model from FIGs. 16A-16B with the same flexible beam 1601, rigid punch 1603, and support 1602a. Shading in the model 1703 indicates stresses in the last converged time increment of the failed primal solution in optimization iteration number 22 where local artificial instability phenomena 1704 were exhibited. The phenomena 1704 ultimately caused failure of the primal solution and therefore, the full optimization failed in optimization iteration number 22 when no numerical stabilization was applied. FIG. 17D shows a 3D model 1705 where shading indicates stresses. The model 1705 is the same model 1701 in FIG. 17A, the same 3D model from FIGs. 16A-16B with the same flexible beam 1601, rigid punch 1603, and support 1602a. Further, the model 1705 was determined at the same time point as the model 1703 of FIG. 17C, but the model 1705 was determined by applying numerical stabilization using adding artificial constitutive modeling at 1202. By adding artificial constitutive modeling, no local artificial instabilities and local buckling are observed (as shown in the view 1709) and the primal solution completely converges.

The results from FIGs. 17C show that when no numerical stabilization is applied the primal solution fails to converge in optimization iteration 22. Local instability and buckling phenomena 1704 in one of the low-density regions are observed causing the primal analysis to fail. Thereby, the full optimization fails in optimization iteration number 22. In contrast, as shown in FIG. 17D, full convergence of the primal solution is achieved for the same model when numerical stabilization in accordance with embodiments is applied. Thereby, by using embodiments the analysis of the primal solution completely converges and no signs of local instabilities and buckling are observed 1709 during the analyzing.

FIG. 18A shows a 3D model 1801 having an optimized design density layout determined using the method 1200. In such an implementation the layout of the model 1801 was determined in optimization iteration number 91. FIG. 18B is a plot 1802 representing an optimization iteration history showing a normalized maximal vertical displacement objective function value 1804 and normalized volume constraint value 1805 as function of the optimization iterations 1806. FIG. 18C shows 3D model 1802 where shading represents stresses of the primal solution of the initial design at optimization iteration number 0 at the time point having the maximum displacement. The model 1802 is the same 3D model from FIGs. 16A-B with the same flexible beam 1601, rigid punch 1603, and support 1602a. FIG. 18D shows 3D model 1803 where shading indicates stresses of the primal solution of the optimized design in optimization iteration number 91 at the time point of maximum displacement.

The results in FIGs. 18A - 18D show that applying embodiments for non-linear topology optimization results in a method that converges completely to a solid-void topology optimization design, where no primal solution fails during the optimization iteration process. Furthermore, a smoother optimization iteration convergence behavior is observed for numerical stabilization when comparing the plots 1702 and 1802 of FIG. 17B and FIG. 18B, respectively.

Embodiments can be used in the field of modeling, including geometrical non-linear modeling and large deformation continuum finite element modeling, where numerical artificial instabilities occur due to numerically ill-conditioned stiffness operators.

Embodiments require less solver iterations to obtain a converged primal solution. Further, embodiments can ensure that a converged primal solution is obtained by suppressing the numerical artificial ill-conditioning of the global operators in the finite element model.

It is noted that the embodiments are described herein in relation to structural finite element models, but embodiments are not limited to structural finite element models and can also be applied to other domains, such as multi-physics finite element models which are solved using the finite element method such as finite element models representing thermal, fluid, and/or electromagnetic designs, amongst other examples.

Embodiments can be used for geometrical non-linear topology optimization during conceptual design. In such applications, voids and intermediate density elements are often ill-conditioned for the stiffness operator. Thereby, the solution for the primal solution in the topology optimization workflow either slowly converges, or does not converge, causing the entire optimization workflow to fail.

Embodiments can be utilized to enforce a faster convergence of the primal solution in each optimization iteration independent of the design layout. Embodiments of the present technology can enforce that the primal converges to a solution in each optimization iteration independent of the design layout.

Advantageously, embodiments can directly link the conditional number of the elemental stiffness operator to a constitutive model.

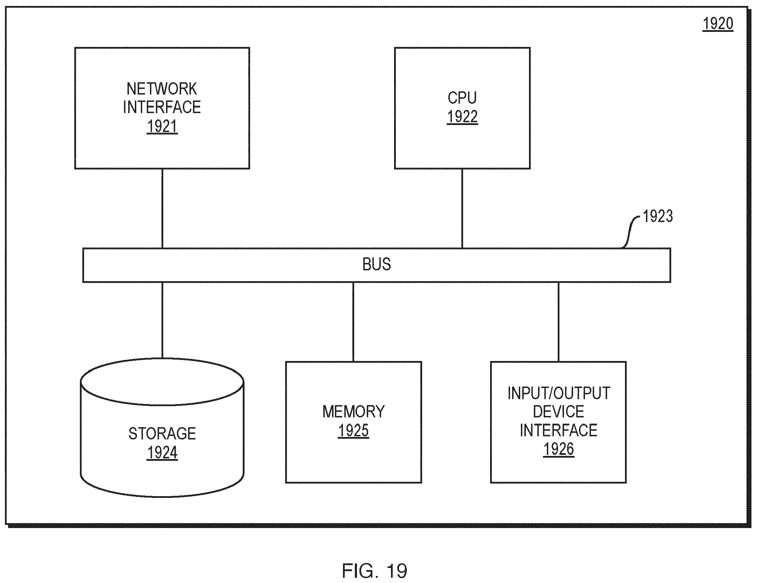

FIG. 19 is a simplified block diagram of a computer-based system 1920 that may be used to determine physical behavior of a real-world object according to any variety of embodiments described herein. The system 1920 comprises a bus 1923. The bus 1923 serves as an interconnect between the various components of the system 1920. Connected to the bus 1923 is an input/output device interface 1926 for connecting various input and output devices such as a keyboard, mouse, display, speakers, etc. to the system 1920. A central processing unit (CPU) 1922 is connected to the bus 1923 and provides for the execution of computer instructions implementing embodiments. Memory 1925 provides volatile storage for data used for carrying out computer instructions implementing embodiments described herein, such as the methods 400, 500, 700, and 1200 previously described in relation to FIGs. 4, 5, 7, and 12, respectively. Storage 1924 provides non-volatile storage for software instructions, such as an operating system (not shown) and embodiment configurations, etc. The system 1920 also comprises a network interface 1921 for connecting to any variety of networks known in the art, including wide area networks (WANs) and local area networks (LANs).

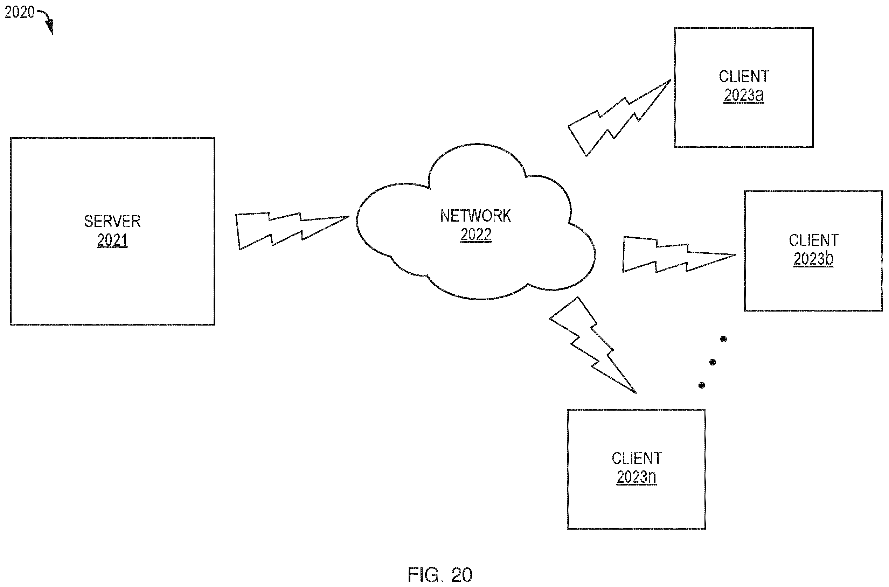

It should be understood that the example embodiments described herein may be implemented in many different ways. In some instances, the various methods and machines described herein may each be implemented by a physical, virtual, or hybrid general purpose computer, such as the computer system 1920, or a computer network environment such as the computer environment 2020, described herein below in relation to FIG. 20. The computer system 1920 may be transformed into the machines that execute the methods described herein, for example, by loading software instructions into either memory 1925 or non-volatile storage 1924 for execution by the CPU 1922. One of ordinary skill in the art should further understand that the system 1920 and its various components may be configured to carry out any embodiments or combination of embodiments described herein. Further, the system 1920 may implement the various embodiments described herein utilizing any combination of hardware, software, and firmware modules operatively coupled, internally, or externally, to the system 1920. Further, the system 1920 may be communicatively coupled to or be embedded within a manufacturing device so as to control the device to create a physical object as described herein.

FIG. 20 illustrates a computer network environment 2020 in which an embodiment of the present invention may be implemented. In the computer network environment 2020, the server 2021 is linked through the communications network 2022 to the clients 2023a-n. The environment 2020 may be used to allow the clients 2023a-n, alone or in combination with the server 2021, to execute any of the methods described herein. For non-limiting example, computer network environment 2020 provides cloud computing embodiments, software as a service (SAAS) embodiments, and the like.

Embodiments or aspects thereof may be implemented in the form of hardware, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

The teachings of all patents, published applications and references cited herein are incorporated by reference in their entirety.

References

[1] Schillinger, D., Düster, A., Rank, E. (2012). The hp-d-adaptive finite cell method for geometrically nonlinear problems of solid mechanics. International Journal for Numerical Methods in Engineering. 89:1171-1202.

[2] Sigmund, O., Maute, K. (2013). Topology optimization approaches. Structural and Multidisciplinary Optimization, 48(6):1031-1055.

[3] Sigmund, O. (2022). On benchmarking and good scientific practice in topology optimization. Structural and Multidisciplinary Optimization, 65, 315.

[4] Bruns, T.E., Tortorelli, D.A. (2003). An Element Removal and Reintroduction Strategy for the Topology Optimization of Structures and Compliant Mechanisms. International Journal for Numerical Methods in Engineering.57:1413-1430.

[5] Bruns, T.E., Sigmund, O. Tortorelli. D.A. (2002). Numerical Methods for the Topology Optimization of Structures that Exhibit Snap Through. International Journal for Numerical Methods in Engineering. 55:1215-1237.

[6] Bruns, T.E. (2006). Zero density lower bounds in topology optimization. Computer Methods in Applied Mechanics & Engineering. 196: 566-578.

[7] Behrou, R., Lotfi, R., Carstensen, J., Ferrari, F., Guest J. (2021). Revisiting element removal for density-based structural topology optimization with reintroduction by Heaviside projection. Computer Methods in Applied Mechanics & Engineering. 380:113799.

[8] Wang, F., Lazarov, B. S., Sigmund, O., and Jensen, J. S. (2014). Interpolation scheme for fictitious domain techniques and topology optimization of finite strain elastic problems. Computer Methods in Applied Mechanics & Engineering. 276(7):453-472.

[9] Dalklint, A., Wallin, M., Tortorelli. D.A. (2021). Structural stability and artificial buckling modes in topology optimization. Structural and Multidisciplinary Optimization. 64(4):1751-1763.

[10] Bluhm, G.L., Sigmund, O., Poulios K. (2021). Internal contact modeling for finite strain topology optimization. Computational Mechanics. 67:1099-1114.

[11] Wallin, M., Ivarsson, N., and Tortorelli, D.A. (2018). Stiffness optimization of non-linear elastic structures. Computer Methods in Applied Mechanics & Engineering. 330:292-307.

[12] Buhl, T., Pedersen, C.B.W., Sigmund, O. (2000). Stiffness design of geometrically nonlinear structures using topology optimization. Structural and Multidisciplinary Optimization. 19:93-104.

[13] Pedersen, C.B.W., Buhl, T., Sigmund, O. (2001). Topology Synthesis of Large displacement compliant mechanisms. International Journal for Numerical Methods in Engineering. 50:2683-2705.

[14] Pedersen, C.B.W., Fleck, N.A., Ananthasuresh, G.K. (2006). Design of a compliant mechanism to modify an actuator characteristic to deliver a constant output force. ASME Journal of Mechanical Design, 128:1101-1112.

[15] Maute, K., Schwarz, S., Ramm, E. (1998). Adaptive topology optimization of elastoplastic structures. Structural optimization. 15:81-91.

[16] Wallin, M., Jönsson, V., Wingren, E. (2016). Topology optimization based on finite strain plasticity. Structural and Multidisciplinary Optimization. 54:783-793.

[17] Pedersen, C.B.W. (2002). Revisiting Topology Optimization of Continuum Structures with Elastoplastic Response. In Proceeding 15th Nordic Seminar on Computational Mechanics, Aalborg, Denmark.

[18] Lahuerta, R.D., Simões, E.T., Campello, E.M.B., Pimenta, P.M., Silva E.C.N. (2013). Towards the stabilization of the low density elements in topology optimization with large deformation. Computational Mechanics. 52(4): 779-797.

[19] Ortigosa, R., Ruiz, D., Gil A.J., Donoso, A., Bellido, J.C. (2020) A stabilization approach for topology optimization of hyperelastic structures with the SIMP method. Computer Methods in Applied Mechanics and Engineering. 364:112924.

[20] Ortigosa, R., Martinez-Frutos, J., Gil A.J., Herrero-Perez, D. (2019). A new stabilization approach for level-set based topology optimization of hyperelastic materials. Structural and Multidisciplinary Optimization. 60:2343-2371.

[21] Abaqus. (2022). SIMULIA User Assistance. Dassault Systèmes.

[22] Riks, E. (2008). On the Purpose and Limitations of Buckling Analysis. 2nd International Conference on Buckling and Post-buckling Behavior of Composite Laminated Shell Structures, Braunschweig, Germany.

[23] Zienkiewicz, O.C., Taylor, R.L. and Fox, D. D. The Finite Element Method for Solid and Structural Mechanics, Seventh Edition, Elsevier, (2014)

[24] Bathe, K.J., Finite Element Procedures in Engineering Analysis, Prentice-Hall, Englewood Cliffs, N. J., (1982).

[25] Bergström, J. (2015). In Mechanics of Solid Polymers: Theory and Computational Modeling. Elsevier.

[26] Tosca. (2022). SIMULIA User Assistance. Dassault Systèmes.

[27] Kleiber, M., Antunez, H., Hien, T. D. and Kowalczyk, P. (1997). Parameter Sensitivity in Nonlinear Mechanics, Theory and Finite Element Computations, John Wiley and Sons.

[28] Choi, K. K. and Kim, N. H (2005). Structural Sensitivity Analysis and Optimization 2: Nonlinear Systems and Applications, Springer-Verlag New York Inc.

[29] Michaleris, P., Tortorelli, D. A. and Vidal, C. A. (1994). Tangent Operators and Design Sensitivity Formulations for Transient Non-linear Coupled Problems with Applications to Elastoplasticity, International Journal for Numerical Methods in Engineering 37: 2471-2499.

**Claims**

1. A computer-implemented method for determining physical behavior of a real-world object, the method comprising, by a processor:

   defining, in memory of the processor, a computer-based model representing the real-world object using a plurality of elements, wherein the defined model indicates one or more materials represented by each element of the plurality of elements;
   defining equations describing physics-based behaviors of the one or more materials;
   defining a stabilization equation that is a function of a non-linear deformation gradient matrix; and
   performing a simulation of the real-world object subject to a load using (i) the defined computer-based model, (ii) the defined equations describing physics-based behaviors, and (iii) the defined stabilization equation, performing the simulation including applying the stabilization equation to each of the plurality of elements, wherein results of performing the simulation indicate the physical behavior of the real-world object.

2. The computer-implemented method of Claim 1 further comprising, for each element of the plurality of elements in the model:
   associating artificial internal forces with the element based on the defined stabilization equation.

3. The computer-implemented method of Claim 2 further comprising, for each element of the plurality of elements:
   associating an artificial-based and physics-based behavior with the element based on the associated artificial internal forces.

4. The computer-implemented method of Claim 3 wherein performing the simulation of the real-world object subject to the load further comprises using the artificial internal forces associated with each element and the artificial-based and physics-based behavior associated with each element.

5. The computer-implemented method of Claim 1, wherein performing the simulation of the real-world object using the defined stabilization equation reduces a condition value associated with a given element of the plurality of elements, where the condition value is a function of the non-linear deformation gradient matrix.

6. The computer-implemented method of Claim 1, further comprising:

   updating the computer-based model based upon the results of performing the simulation; and
   determining an updated physical behavior of the real-world object by performing a simulation of the real-world object using (i) the updated computer-based model, (ii) the defined equations describing physics-based behaviors, and (iii) the defined stabilization equation.

7. The computer-implemented method of Claim 6, further comprising:
   iterating (i) updating the computer-based model based upon the determined updated physical behavior, and (ii) the determining the updated physical behavior, until the determined updated physical behavior satisfies a criterion.

8. The computer-implemented method of Claim 1 wherein the computer-based model is any one of or a combination of a finite element model, a boundary element method, a finite difference method, a finite volume method, or a discrete element method.

9. The computer-implemented method of Claim 1, wherein the real-world object represented by the computer-based model is any one of an automobile, an industrial equipment, a plane, a civil structure, a marine device, a medical instrument, a consumer good, an electronic device, armor, or manufacturing equipment.

10. A system for determining physical behavior of a real-world object, the system comprising:

   a processor; and
   a memory with computer code instructions stored thereon, the processor and the memory, with the computer code instructions, being configured to cause the system to perform the method of any one of claims 1 to 9.

11. A computer program product comprising instructions which, when the instructions are executed by a computer, cause the computer to perform the method of any one of claims 1 to 9.

100

INITIAL DESIGN FOR
THE DESIGN VARIABLES AND
THEREBY, MATERIAL LAYOUT —101

FINITE ELEMENT ANALYSIS
FOR THE PRIMAL SOLUTION INCLUDING
GEOMETRICAL NON-LINEAR MODELING —102

SENSITIVITY ANALYSIS —103

DESIGN VARIABLE UPDATE —104

CONSTITUTIVE MATERIAL UPDATE
USING THE UPDATED MATERIAL LAYOUT —105

NEXT
OPTIMIZATION
ITERATION

106
OPTIMIZATION
CONVERGED
?

NO

YES

OPTIMIZED DESIGN FOR
THE DESIGN VARIABLES AND
THEREBY, MATERIAL LAYOUT —107

FIG. 1

EP 4 451 168 A1

FIG. 2

FIG. 3A — 2D QUADRATIC FOUR NODE ELEMENT BEING FULLY INTEGRATED USING FOUR INTEGRATION POINTS

NUMERICAL INTEGRATION POINTS WHERE THE CONDITION NUMBER IS EVALUATED
301 — 308a-d
FINITE ELEMENT NODES — 301a-d

FIG. 3B — UNIAXIAL COMPRESSION — 302
CONDITION NUMBER $\kappa_F(F)$ 306a
$\kappa_F(F) < 10$
DEFORMATION — 307a
309a

FIG. 3C — SIMPLE SHEAR — 303
CONDITION NUMBER $\kappa_F(F)$ 306b
$\kappa_F(F) < 3$
DEFORMATION — 307b
309b

FIG. 3D — VOLUMETRIC COMPRESSION — 304
CONDITION NUMBER $\kappa_F(F)$ 306c
$\kappa_F(F) = const.$
DEFORMATION — 307c
309c

FIG. 3E — DIAGONAL COMPRESSION — 305
CONDITION NUMBER $\kappa_F(F)$ 306d
$\kappa_F(F) = 160!$
DEFORMATION — 307d
309d

FIG. 4

EP 4 451 168 A1

```
                                                          ┌── 500
                                                          ▼
┌──────────────────────────────────────────────────────────┐
│ DEFINE, IN MEMORY, A COMPUTER BASED MODEL REPRESENTING A   │
│ REAL-WORLD OBJECT USING A PLURALITY OF ELEMENTS, WHEREIN   │──── 501
│ THE DEFINED MODEL INDICATES ONE OR MORE MATERIALS          │
│ REPRESENTED BY EACH ELEMENT OF THE PLURALITY OF ELEMENTS   │
└──────────────────────────────────────────────────────────┘
                             │
                             ▼
┌──────────────────────────────────────────────────────────┐
│      DEFINE EQUATIONS DESCRIBING PHYSICS-BASED             │──── 502
│        BEHAVIORS OF THE ONE OR MORE MATERIALS              │
└──────────────────────────────────────────────────────────┘
                             │
                             ▼
┌──────────────────────────────────────────────────────────┐
│  DEFINE A STABILIZATION EQUATION THAT IS A FUNCTION OF A   │──── 503
│        NON-LINEAR DEFORMATION GRADIENT MATRIX             │
└──────────────────────────────────────────────────────────┘
                             │
                             ▼
┌──────────────────────────────────────────────────────────┐
│ PERFORM A SIMULATION OF THE REAL-WORLD OBJECT SUBJECT      │
│ TO A LOAD USING (i) THE DEFINED COMPUTER BASED MODEL,      │──── 504
│ (ii) THE DEFINED EQUATIONS DESCRIBING PHYSICS-BASED        │
│ BEHAVIORS, AND (iii) THE DEFINED STABILIZATION EQUATION    │
└──────────────────────────────────────────────────────────┘
```

FIG. 5

FIG. 6

DEFINE CAE MODEL
(FINITE ELEMENT MODEL) — 701

— 700

**PHYSICAL** CONSTITUTIVE MODEL
$$\left[ D_{physical} \right]$$
702

**PHYSICAL** INTERNAL FORCES
$$\left\{ I_{physical} \right\}$$
703

**PHYSICAL** STIFFNESS OPERATOR
$$\left[ K_{physical} \right]$$
704

**ASSEMBLED** RESIDUAL USING EXTERNAL
AND INTERNAL FORCES
$$\{R(\{U\})\} = \{P\} - \{I_{physical}\} - \{I_{artificial}\} = \{0\}$$
708

**ASSEMBLED** STIFFNESS OPERATOR
$$[ K ] = [ K_{physical} ] + [ K_{artificial} ]$$
709

**ADDING ARTIFICIAL** CONSTITUTIVE MODEL
$$\left[ D_{artificial} \right]$$
705

**ADDING ARTIFICIAL** INTERNAL FORCES
$$\left\{ I_{artificial} \right\}$$
706

**ADDING ARTIFICIAL** STIFFNESS OPERATOR
$$\left[ K_{artificial} \right]$$
707

**SOLVING** EQUILIBRIUM OF CAE MODEL
(FINITE ELEMENT MODEL) USING THE
ASSEMBLED GLOBAL STIFFNESS OPERATOR
FOR DETERMINING THE PRIMAL SOLUTION $\{U\}$
FULFILLING THE RESIDUAL $\{R\}=\{0v\}$
710

SUPPLEMENTARY
TERMS

PRIMAL
SOLUTION CONVERGED
? — 711

NEXT SOLVER ITERATION ← NO

YES

CONVERGED PRIMAL SOLUTION — 712

FIG. 7

FIG. 8

FIG. 9A

FIG. 9B

FIG. 9C

FIG. 9D

| ELEMENT TYPE | STRICTLY SOLID MODEL AS REFERENCE SOLUTION 1005 | SOLID-VOID MODELS NO NUMERICAL STABILIZATION 1006 | SOLID-VOID MODELS NUMERICAL STABILIZATION ADDING ARTIFICIAL CONSTITUTIVE MODELING 1007 |
|---|---|---|---|
| TRIANGLE 3-NODE FIRST ORDER PLANE STRESS ELEMENT (CPS3) 1004a | 1001a | 1002a | 1003a  $C_K = 10^{-6}E$  $D = 10^8/E$ |
| TRIANGLE 6-NODE SECOND ORDER PLANE STRESS ELEMENT (CPS6) 1004b | 1001b | 1002b | 1003b  $C_K = 10^{-6}E$  $D = 10^8/E$ |
| QUADRILATERAL 4-NODE FIRST ORDER PLANE STRESS ELEMENT (CPS4) 1004c | 1001c | 1002c | 1003c  $C_K = 10^{-6}E$  $D = 10^8/E$ |
| QUADRILATERAL 4-NODE FIRST ORDER PLANE STRESS ELEMENT HAVING REDUCED INTEGRATION WITH HOURGLASS CONTROL (CPS4R) 1004d | 1001d | 1002d | 1003d  $C_K = 10^{-6}E$  $D = 10^8/E$ |

FIG. 10

| ELEMENT TYPE | STRICTLY SOLID MODEL AS REFERENCE SOLUTION 1105 | SOLID-VOID MODELS NO NUMERICAL STABILIZATION 1106 | SOLID-VOID MODELS NUMERICAL STABILIZATION ADDING ARTIFICIAL CONSTITUTIVE MODELING 1107 |
|---|---|---|---|
| TETRAHEDRAL 4-NODE FIRST ORDER ELEMENT (C3D4) 1104a | 1101a | 1102a | 1103a $C_K = 10^{-8.5}E$ $D = 10^{11}/E$ |
| HEXAHEDRAL 8-NODE FIRST ORDER ELEMENT (C3D8) 1104b | 1101b | 1102b | 1103b $C_K = 10^{-8}E$ $D = 10^{9}/E$ |
| HEXAHEDRAL 8-NODE FIRST ORDER ELEMENT HAVING REDUCED INTEGRATION WITH HOURGLASS CONTROL (C3D8R) 1104c | 1101c | 1102c | 1103c $C_K = 10^{-10.5}E$ $D = 10^{8}/E$ |

FIG. 11

EP 4 451 168 A1

FIG. 12

1200

1201 — INITIAL DESIGN (INITIAL DESIGN VARIABLES)

1202

1202a — PHYSICAL CONSTITUTIVE MODELS + **ADDING ARTIFICIAL** CONSTITUTIVE MODEL

1202b — ASSEMBLED RESIDUAL + STIFFNESS OPERATOR FROM PHYSICAL SYSTEM AND **ARTIFICIAL CONTRIBUTION**

1202c — **SOLVING FOR PRIMAL SOLUTION AND EQUILIBRIUM OF CAE MODEL (FINITE ELEMENT MODEL) USING THE ASSEMBLED GLOBAL STIFFNESS OPERATOR**

1202d — PRIMAL SOLUTION CONVERGED ?

NEXT SOLVER ITERATION ← NO

YES

1202e — CONVERGED PRIMAL SOLUTION

1203 — DEFINE OBJECTIVE FUNCTION OR/AND CONSTRAINTS USING STIFFNESS, DISPLACEMENTS, FORCES, STRESSES, STRAINS AND ETC. HOWEVER, NOT LIMITED TO THESE TYPES OF MEASURES

1204 — CALCULATE SENSITIVIES OF OBJECTIVE FUNCTION OR/AND CONSTRAINTS

1205 — MATHEMATICAL PROGRAMMING

1206 — GENERATE NEW MODEL USING MODIFIED DESIGN VARIABLES

1207 — OPTIMIZATION CONVERGED ?

YES

NEXT OPTIMIZATION ITERATION ← NO

1208 — FINAL OPTIMIZED DESIGN (OPTIMIZED DESIGN VARIABLES)

34

FIG. 13

ELASTIC PHYSICAL MATERIAL: ⟵1401

ELASTOPLASTIC PHYSICAL MATERIAL: ⟵1402

NUMERICAL STABILIZATION ADDING ARTIFICIAL CONSTITUTIVE MODELING ⟵1404a

NUMERICAL STABILIZATION ADDING ARTIFICIAL CONSTITUTIVE MODELING ⟵1404b

**LOADING P**  ⟵1403a  NO STABILIZATION

$$C_K = 5 \cdot 10^{-4} \cdot E$$
$$D = 2 \cdot 10^5 / E$$

**LOADING P**  ⟵1403b  NO STABILIZATION

$$C_K = 10^{-6} \cdot E$$
$$D = 10^8 / E$$

| LOADING P | | |
|---|---|---|
| 1[N] | | |
| 10[kN] | | |
| 100[kN] | | |
| 200[kN] | FAIL IN CONVERGENCE | |
| 500[kN] | FAIL IN CONVERGENCE | |
| 750[kN] | FAIL IN CONVERGENCE | |

| LOADING P | | |
|---|---|---|
| 1[N] | | |
| 5[kN] | | |
| 7.5[kN] | | |
| 10[kN] | FAIL IN CONVERGENCE | |
| 15[kN] | FAIL IN CONVERGENCE | |
| 20[kN] | FAIL IN CONVERGENCE | |

FIG. 14A

FIG. 14B

EP 4 451 168 A1

## ELASTIC PHYSICAL MATERIAL AND $P = 500$ kN:

### NO NUMERICAL STABILIZATION: — 1501

STRESS DISTRIBUTION

— 1503

FEW ELEMENTS ARE NUMERICAL INSTABLE
AND ILL-CONDITIONED
⇒ THE PRIMAL SOLUTION FOR THE STRUCTURAL
EQUILIBRIUM FAILS TO CONVERGE
IN A GIVEN OPTIMIZATION ITERATION
⇒ A NON-CONVERGED DESIGN IS OBTAINED
DURING THE OPTIMIZATION ITERATIONS
⇒ OPTIMIZATION FAILS IN OBTAINING
A CONVERGED AND OPTIMIZED DESIGN
⇒ **ENTIRE OPTIMIZATION CONVERGENCE FAILS**

### NUMERICAL STABILIZATION ADDING ARTIFICIAL CONSTITUTIVE MODELING:

— 1502

— 1505

STRESS DISTRIBUTION OF
**PHYSICAL CONSTITUTIVE**
SYSTEM WHERE PHYSICAL
BEHAVIOR IS PRESERVED

— 1506

STRESS DISTRIBUTION
OF **ADDED ARTIFICIAL
CONSTITUTIVE MODELING**
FOR NUMERICAL
STABILIZATION SUPPRESSING
NUMERICAL INSTABILITIES

DISPLACEMENT — 1508
OPTIMIZATION CONVERGENCE HISTORY OF
THE OBJECTIVE FUNCTION FOR MINIMIZE
DISPLACEMENT AT LOADING POINT

0.75
0.50
0.25
0
0        20        40    OPTIMIZATION
                             ITERATIONS
— 1504a

RELATIVE MASS — 1509
0.50
— 1504b
OPTIMIZATION CONVERGENCE
HISTORY OF CONSTRAINT FOR THE
0.25    RELATIVE MASS CONSTRAINT OF 50%

0
0        20        40    OPTIMIZATION
                             ITERATIONS

USING NUMERICAL STABILIZATION ADDING ARTIFICIAL CONSTITUTIVE MODELING:
LOCAL NUMERICAL INSTABLE ELEMENTS ARE STABILIZED
**OBTAINED A CONVERGED GEOMETRICAL NONLINEAR OPTIMIZED DESIGN**
**→ YIELD OPTIMIZED NONLINEAR DESIGN WITH RESPECT**
**TO LIGHTWEIGHT STIFFNESS DESIGN**
**SIGNIFICANT FASTER AND SMOOTHER OPTIMIZATION CONVERGENCE**
**COMPARED TO LITERATURE AND BENCHMARK REFERENCES**
**→ LESS USAGE OF COMPUTATIONAL COSTS AND RUNTIME**
**FOR DETERMINING THE OPTIMIZED DESIGN**

FIG. 15

FIG. 16B

FIG. 16A

FIG. 17A

FIG. 17B

FIG. 17C

FIG. 17D

FIG. 18A

FIG. 18B

- NORM. MAX. VERTICAL DISPLACEMENT
- NORM. VOLUME CONSTRAINT

FIG. 18C

FIG. 18D

EP 4 451 168 A1

FIG. 19

SERVER 2021

NETWORK 2022

CLIENT 2023a

CLIENT 2023b

CLIENT 2023n

2020

FIG. 20

Europäisches
Patentamt

European
Patent Office

Office européen
des brevets

# EUROPEAN SEARCH REPORT

Application Number

EP 24 17 1441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSAN OSAMA I. ET AL: "An upwind vertex centred finite volume algorithm for nearly and truly incompressible explicit fast solid dynamic applications: Total and Updated Lagrangian formulations", JOURNAL OF COMPUTATIONAL PHYSICS: X, vol. 3, 1 June 2019 (2019-06-01), page 100025, XP093201789, ISSN: 2590-0552, DOI: 10.1016/j.jcpx.2019.100025 Retrieved from the Internet: URL:https://www.sciencedirect.com/science/article/pii/S2590055219300411> * abstract * * figures 6,25 * * equations (1a)-(1d) * * equation (33) * * section 4 * * equation (36) * * section 5 * * equations (54a)-(55b) * * section 5.3 * * the whole document * ----- | 1-11 | INV. G06F30/23 ADD. G06F111/10 G06F111/06 |
| X | BONET JAVIER ET AL: "A first order hyperbolic framework for large strain computational solid dynamics. Part I: Total Lagrangian isothermal elasticity", COMPUTER METHODS IN APPLIED MECHANICS AND ENGINEERING, NORTH-HOLLAND, AMSTERDAM, NL, vol. 283, 7 October 2014 (2014-10-07), pages 689-732, XP029108287, ISSN: 0045-7825, DOI: 10.1016/J.CMA.2014.09.024 * abstract * * p.708; equations (116a)-(116b) * * section 5.4.2 * * section 6 * * the whole document * ----- | 1-11 | TECHNICAL FIELDS SEARCHED (IPC) G06F |

The present search report has been drawn up for all claims

| Place of search | Date of completion of the search | Examiner |
|---|---|---|
| Munich | 4 September 2024 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHILLINGER, D ; DÜSTER, A. ; RANK, E.** The hp-d-adaptive finite cell method for geometrically nonlinear problems of solid mechanics. *International Journal for Numerical Methods in Engineering.,* 2012, vol. 89, 1171-1202
- **SIGMUND, O. ; MAUTE, K.** Topology optimization approaches. *Structural and Multidisciplinary Optimization,* 2013, vol. 48 (6), 1031-1055
- **SIGMUND, O.** On benchmarking and good scientific practice in topology optimization. *Structural and Multidisciplinary Optimization,* 2022, vol. 65, 315
- **BRUNS, T.E. ; TORTORELLI, D.A.** An Element Removal and Reintroduction Strategy for the Topology Optimization of Structures and Compliant Mechanisms. *International Journal for Numerical Methods in Engineering,* 2003, vol. 57, 1413-1430
- **BRUNS, T.E ; SIGMUND, O ; TORTORELLI, D.A.** Numerical Methods for the Topology Optimization of Structures that Exhibit Snap Through. *International Journal for Numerical Methods in Engineering,* 2002, vol. 55, 1215-1237
- **BRUNS, T.E.** Zero density lower bounds in topology optimization. *Computer Methods in Applied Mechanics & Engineering.,* 2006, vol. 196, 566-578
- **BEHROU, R ; LOTFI, R ; CARSTENSEN, J. ; FERRARI, F ; GUEST J.** Revisiting element removal for density-based structural topology optimization with reintroduction by Heaviside projection. *Computer Methods in Applied Mechanics & Engineering.,* 2021, vol. 380, 113799
- **WANG, F ; LAZAROV, B. S ; SIGMUND, O ; JENSEN, J. S.** Interpolation scheme for fictitious domain techniques and topology optimization of finite strain elastic problems. *Computer Methods in Applied Mechanics & Engineering.,* 2014, vol. 276 (7), 453-472
- **DALKLINT, A ; WALLIN, M. ; TORTORELLI. D.A.** Structural stability and artificial buckling modes in topology optimization. *Structural and Multidisciplinary Optimization.,* 2021, vol. 64 (4), 1751-1763
- **BLUHM, G.L ; SIGMUND, O ; POULIOS K.** Internal contact modeling for finite strain topology optimization. *Computational Mechanics.,* 2021, vol. 67, 1099-1114
- **WALLIN, M. ; IVARSSON, N ; TORTORELLI, D.A.** Stiffness optimization of non-linear elastic structures. *Computer Methods in Applied Mechanics & Engineering.,* 2018, vol. 330, 292-307
- **BUHL, T ; PEDERSEN, C.B.W ; SIGMUND, O.** Stiffness design of geometrically nonlinear structures using topology optimization. *Structural and Multidisciplinary Optimization.,* 2000, vol. 19, 93-104
- **PEDERSEN, C.B.W. ; BUHL, T ; SIGMUND, O.** Topology Synthesis of Large displacement compliant mechanisms. *International Journal for Numerical Methods in Engineering,* 2001, vol. 50, 2683-2705
- **PEDERSEN, C.B.W ; FLECK, N.A ; ANANTHASURESH, G.K.** Design of a compliant mechanism to modify an actuator characteristic to deliver a constant output force. *ASME Journal of Mechanical Design,* 2006, vol. 128, 1101-1112
- **MAUTE, K. ; SCHWARZ, S. ; RAMM, E.** Adaptive topology optimization of elastoplastic structures. *Structural optimization.,* 1998, vol. 15, 81-91
- **WALLIN, M. ; JÖNSSON, V ; WINGREN, E.** Topology optimization based on finite strain plasticity. *Structural and Multidisciplinary Optimization,* 2016, vol. 54, 783-793
- **PEDERSEN, C.B.W.** Revisiting Topology Optimization of Continuum Structures with Elastoplastic Response. *In Proceeding 15th Nordic Seminar on Computational Mechanics,* 2002
- **LAHUERTA, R.D ; SIMÕES, E.T ; CAMPELLO, E.M.B ; PIMENTA, P.M ; SILVA E.C.N.** Towards the stabilization of the low density elements in topology optimization with large deformation. *Computational Mechanics.,* 2013, vol. 52 (4), 779-797
- **ORTIGOSA, R. ; RUIZ, D. ; GIL A.J. ; DONOSO, A ; BELLIDO, J.C.** A stabilization approach for topology optimization of hyperelastic structures with the SIMP method. *Computer Methods in Applied Mechanics and Engineering,* 2020, vol. 364, 112924
- **ORTIGOSA, R ; MARTINEZ-FRUTOS, J. ; GIL A.J. ; HERRERO-PEREZ, D.** A new stabilization approach for level-set based topology optimization of hyperelastic materials. *Structural and Multidisciplinary Optimization.,* 2019, vol. 60, 2343-2371
- **ABAQUS.** *SIMULIA User Assistance. Dassault Systèmes,* 2022
- **RIKS, E.** On the Purpose and Limitations of Buckling Analysis. *2nd International Conference on Buckling and Post-buckling Behavior of Composite Laminated Shell Structures,* 2008
- **ZIENKIEWICZ, O.C ; TAYLOR, R.L ; FOX, D. D.** The Finite Element Method for Solid and Structural Mechanics. Elsevier, 2014

- **BATHE, K.J.** Finite Element Procedures in Engineering Analysis, Prentice-Hall. Englewood Cliffs, N. J, 1982
- **BERGSTRÖM, J.** In Mechanics of Solid Polymers: Theory and Computational Modeling. Elsevier, 2015
- **TOSCA.** SIMULIA User Assistance. *Dassault Systèmes,* 2022
- **KLEIBER, M ; ANTUNEZ, H. ; HIEN, T. D. ; KOWALCZYK, P.** Parameter Sensitivity in Nonlinear Mechanics, Theory and Finite Element Computations. John Wiley and Sons, 1997
- **CHOI, K. K. ; KIM, N. H.** Structural Sensitivity Analysis and Optimization 2: Nonlinear Systems and Applications. Springer-Verlag New York Inc, 2005
- **MICHALERIS, P. ; TORTORELLI, D. A. ; VIDAL, C. A.** Operators and Design Sensitivity Formulations for Transient Non-linear Coupled Problems with Applications to Elastoplasticity. *International Journal for Numerical Methods in Engineering,* 1994, vol. 37, 2471-2499